# FASCICULE DE BREVET EUROPEEN

(11) **EP 3 576 418 B1**
(45) Date de publication et mention de la délivrance du brevet: **11.11.2020**
(21) Numéro de dépôt: 19175292.2
(22) Date de dépôt: 20.05.2019
(51) Int. Cl.: H04N 21/433, H04N 7/173, H04N 21/432

(54) **LECTURE DE CONTENU MULTIMÉDIA**
MULTIMEDIA-INHALTE ABSPIELEN
MULTIMEDIA CONTENT PLAYBACK

(30) Priorité: 31.05.2018 FR 1854693
(43) Date de publication de la demande: 04.12.2019
(73) Titulaire: ORANGE, 75015 Paris (FR)
(72) Inventeur: THOME, Dominique, 92326 CHATILLON CEDEX (FR); RIGAUDEAU, Serge, 92326 CHATILLON CEDEX (FR); RACIN, Lionel, 92326 CHATILLON CEDEX (FR); DAVENET, Stéphane, 92326 CHATILLON CEDEX (FR)

(56) Documents cités:
- EP-A1- 2 061 228
- US-A1- 2009 187 948
- US-A1- 2010 154 011

## Description

### I. Domaine de l'invention

Le domaine de l'invention est celui de la lecture de contenus multimédia dans le contexte audiovisuel.

L'invention s'applique plus particulièrement à la lecture d'un contenu multimédia à diffusion programmée.

L'invention peut notamment être mise en œuvre dans un terminal tel que par exemple une tablette, un téléphone portable, un smartphone (« téléphone intelligent »), un ordinateur personnel, un récepteur de télévision, un décodeur de type Set-Top-Box ou un poste de radio connecté à un réseau de communication, etc...

### II. Présentation de l'art antérieur

Les contenus multimédia à diffusion programmée sont par exemple des programmes de télévision diffusés en direct, qui sont transmis, via un réseau de transmission de données, puis reçus par un terminal de lecture de contenu multimédia d'un utilisateur donné, tel que par exemple un récepteur de télévision numérique équipé d'un décodeur du type Set-Top-Box.

Actuellement, de tels contenus ne sont pas toujours bien adaptés aux intérêts et/ou aux habitudes de l'utilisateur qui les regardent ou les écoutent. Dans le cas par exemple des journaux de télévision, ces derniers sont diffusés à un instant prédéterminé, par exemple 20h pour l'édition du soir. Un utilisateur qui rentre chez lui après 20h ratera donc tout ou partie du journal, ce qui l'oblige à attendre que la totalité du journal soit disponible en mode de diffusion différée, qu'on appelle également *catch-up TV* ou *replay TV* selon la terminologie anglo-saxonne couramment utilisée.

Il arrive aussi que les types de contenus radio ou télé diffusés n'intéressent pas particulièrement l'utilisateur, qui se passionne pour des sujets bien spécifiques, lesquels peuvent d'ailleurs parfois être considérés comme trop spécifiques par les chaînes de télévision ou de radio, pour que ces dernières souhaitent diffuser des contenus sur ces sujets à des heures de forte audience, notamment la tranche horaire 20h-23h. Il en résulte que l'utilisateur a tendance à zapper d'une chaîne à l'autre pour chercher un contenu multimédia qui lui plaise, voire à délaisser les chaînes de télévision ou de radio pour se diriger vers d'autres types de contenus multimédia, tels que par exemple les contenus multimédia téléchargeables depuis des plateformes de fourniture de contenus. Ces contenus sont accessibles dans des catalogues de contenus multimédia, tels que des bibliothèques multimédia, par exemple des catalogues de vidéo à la demande (VOD, pour « Video on Demand » en anglais), des catalogues de podcasts audio et/ou vidéo, etc... Toutefois, les services proposant ces contenus multimédia téléchargeables sont le plus souvent payants et contraignent l'utilisateur à effectuer certaines démarches pour s'inscrire au service, sélectionner le(s) contenu(s) qu'il souhaite voir ou écouter, puis le(s) télécharger. Par ailleurs, une fois que les contenus VOD ont été téléchargés, ils doivent être lus dans une période courte, ce qui oblige l'utilisateur à être disponible durant cette période courte pour profiter des contenus téléchargés.

Un autre inconvénient des contenus à diffusion programmée réside dans le fait que les conditions de visualisation ou d'écoute ne sont pas toujours optimales en raison du débit de transmission de données parfois insuffisant entre la plateforme de fourniture de contenus et le réseau local auquel est connecté le récepteur de télévision numérique. De ce fait, l'utilisateur est dans l'impossibilité de visionner ou d'écouter des contenus multimédia, avec un haut niveau de qualité.

### III. Objet et résumé de l'invention

Un des buts de l'invention est de remédier à des inconvénients de l'état de la technique précité.

A cet effet, un objet de la présente invention concerne un procédé de lecture d'un contenu multimédia, à un instant prédéterminé inscrit dans un flux de diffusion reçu par un dispositif de lecture de contenu multimédia.

Le procédé de lecture selon l'invention est remarquable en ce que, au niveau d'un dispositif de lecture du contenu multimédia, est mis en œuvre ce qui suit :
- avant l'instant prédéterminé :
   - envoyer à un serveur distant une requête en fourniture d'un contenu multimédia à lire,
   - recevoir un identifiant du contenu multimédia à lire, l'identifiant étant associé à une information de balisage de flux,
   - stocker l'identifiant reçu en correspondance avec l'information de balisage reçue,
   - télécharger tout ou partie du contenu multimédia à partir de l'identifiant reçu,
- à l'instant prédéterminé :
   - recevoir un flux contenant une information de balisage identique à l'information de balisage qui a été stockée avant l'instant prédéterminé,
   - à partir de l'information de balisage identique reçue, lire le contenu multimédia téléchargé, correspondant à l'identifiant stocké en correspondance avec l'information de balisage.

L'invention permet avantageusement de proposer à l'utilisateur d'un dispositif de lecture de contenu multimédia, de stocker à l'avance, dans le dispositif de lecture, tout ou partie d'un contenu multimédia que l'utilisateur pourra visionner et/ou écouter à un instant prédéterminé associé à une information de balisage inscrite dans un flux de diffusion qui est reçu par le dispositif de lecture.

Compte tenu du fait que le téléchargement de tout ou partie du contenu multimédia à lire à l'instant prédéterminé a lieu à l'avance dans le dispositif de lecture, le contenu multimédia peut être avantageusement téléchargé avec un niveau de qualité supérieur à celui qu'il aurait s'il était diffusé en temps réel, ce qui est d'autant plus intéressant pour un utilisateur, dont le réseau local, auquel est connecté le dispositif de lecture, présente un faible débit de transmission.

Le téléchargement pourra par exemple être mis en œuvre dans des périodes où l'audience est peu élevée, de manière à éviter un encombrement du réseau qui serait provoqué par le lancement de plusieurs requêtes en fourniture de contenu, en provenance de plusieurs dispositifs de lecture éligibles au service proposant un tel téléchargement. Le téléchargement peut également être mis en œuvre dans des périodes où le dispositif de lecture est en veille fonctionnelle (mais actif pour les services techniques), de manière à éviter, lorsque le dispositif de lecture est en fonctionnement, tout problème de sous-capacité du réseau local de l'utilisateur, qui devrait absorber à la fois le téléchargement du contenu multimédia à lire et la réception du flux transportant les contenus diffusés par une chaîne sélectionnée par l'utilisateur.

Enfin, l'avantage de télécharger le contenu multimédia à l'avance entraîne une lecture de ce contenu qui est stable, car indépendante des fluctuations de débit du réseau local auquel est connecté le dispositif de lecture.

Grâce à l'invention, l'utilisateur aura ainsi la possibilité de visionner ou d'écouter des contenus multimédia avant même qu'ils soient diffusés, ce qui est particulièrement avantageux lorsqu'il s'agit par exemple d'émissions de radio ou de télévision préenregistrées. Puisque les contenus multimédia sont enregistrés, l'utilisateur est avantageusement en mesure de se positionner dans le contenu où il le souhaite pour le jouer, d'avancer sur certains passages, de revenir au début ou à la fin, etc..., ce qui rend le procédé de lecture beaucoup plus souple que celui proposé en lien avec les services de *catch-up TV*/*replay TV (disponible après la diffusion complète),* ou même avec service de *start over (restart)* qui ne concerne que les contenus en cours de diffusion.

Selon un mode de réalisation particulier, lorsque c'est une partie du contenu multimédia qui a été téléchargée, puis lue à l'instant prédéterminé, le téléchargement de la partie restante du contenu multimédia se poursuit simultanément à la lecture de la partie téléchargée, de sorte que la partie restante du contenu multimédia soit lue à la suite de la partie téléchargée qui a été lue à l'instant prédéterminé.

Un tel mode de réalisation permet à un utilisateur intéressé par un contenu multimédia commençant à une heure définie dans la grille de programmation, et n'étant pas disponible à cette heure définie, de pouvoir visionner ou écouter plus tard la totalité du contenu, et cela quand il le souhaite puisque le contenu a été téléchargé, moyennant un niveau de qualité supérieur à celui du contenu en cours de diffusion.

Selon un autre mode de réalisation, lorsque c'est une partie du contenu multimédia qui a été téléchargée, puis lue à l'instant prédéterminé, la partie restante du contenu multimédia est lue dans le flux en temps réel, par exemple au moyen d'un procédé connu de streaming adaptatif (DASH pour « Dynamic *Adaptive Streaming* over http »), à la suite de la partie téléchargée qui a été lue à l'instant prédéterminé.

Un tel mode de réalisation est avantageux dans le cas où la partie restante du contenu multimédia n'a pas pu être téléchargée à temps.

Selon un mode de réalisation, l'utilisateur a la possibilité de régler les paramètres d'usage de son dispositif de lecture selon différentes modalités ci-dessous :
- téléchargement à l'avance de la totalité du contenu multimédia en haute qualité,
- streaming du reste du contenu multimédia si la totalité du contenu n'a pas pu être téléchargée avant l'instant de diffusion de ce dernier,
- valeur du débit de transmission du contenu à télécharger,
- valeur du débit binaire (bit rate) du contenu à télécharger,
- etc...

Selon un autre mode de réalisation particulier :
- l'information de balisage qui est reçue avant l'instant prédéterminé étant en outre associée à un instant égal à, ou antérieurement proche de, l'instant prédéterminé de lecture du contenu multimédia,
- le téléchargement du contenu multimédia est mis en œuvre selon un débit qui tient compte de l'instant égal à, ou antérieurement proche de, l'instant prédéterminé de lecture du contenu multimédia.

Grâce à ce mode de réalisation, le téléchargement du contenu multimédia à lire peut être mis en œuvre selon un débit variable. Ainsi, le débit sera d'autant plus élevé (respectivement plus faible) que la durée séparant l'instant auquel est reçue l'information relative au contenu multimédia à lire, et l'instant égal à, ou antérieurement proche de, l'instant prédéterminé de lecture du contenu multimédia, est faible (respectivement élevée).

Selon un autre mode de réalisation particulier, lors de l'envoi au serveur distant de la requête en fourniture du contenu multimédia à lire à l'instant prédéterminé, la requête contient une information de profil d'un utilisateur du dispositif de lecture.

Un tel mode de réalisation permet à l'utilisateur de paramétrer le dispositif de lecture selon au moins un critère conforme à ses intérêts personnels. Un tel critère peut être lié au genre du contenu (ex : actualités, film, émissions de variétés, etc...), à une catégorie du contenu (ex : science-fiction, musique classique, animaux sauvages, etc...). Un tel critère peut être également lié à la localisation de l'utilisateur (ex : département de la ville dans laquelle l'utilisateur habite, le nom de sa rue ou de son quartier, etc...). Un tel critère peut être également temporel, par exemple être lié à une ou plusieurs plages horaires au cours desquelles l'utilisateur a l'habitude de regarder la télévision ou d'écouter la radio.

Grâce à un tel paramétrage, il est possible de télécharger à l'avance, dans le dispositif de lecture de l'utilisateur, un contenu multimédia :
- qui présente un niveau de qualité audio et/ou vidéo optimal,
- tout en étant conforme aux intérêts de l'utilisateur,
- et tout en correspondant à la ligne éditoriale de la régie de radiodiffusion ou de télédiffusion.

Selon un autre mode de réalisation particulier, un flux représentatif d'au moins un contenu multimédia, différent du contenu multimédia à lire à l'instant prédéterminé, est reçu par le dispositif de lecture, en parallèle du flux qui est reçu avant et/ou à l'instant prédéterminé de lecture du contenu multimédia.

Un tel mode de réalisation permet au dispositif de lecture de télécharger à l'avance un contenu multimédia, avant l'instant prédéterminé de sa lecture, pendant que l'utilisateur visionne et/ou écoute un autre contenu multimédia en cours de diffusion, un tel téléchargement étant totalement transparent pour l'utilisateur. Un tel mode de réalisation est adapté aux utilisateurs disposant d'un réseau local ayant un débit suffisamment élevé de transmission de données pour recevoir le contenu en cours de diffusion et le contenu multimédia à télécharger.

En outre, l'intérêt du mode de réalisation venant d'être mentionné réside dans le fait que l'autre contenu multimédia programmé à l'instant prédéterminé, tel qu'inscrit dans le flux de diffusion qui est reçu par le dispositif de lecture, peut avantageusement être remplacé par le contenu multimédia qui a été stocké à l'avance dans le dispositif de lecture de l'utilisateur. De cette manière, quel que soit le moment où l'utilisateur sélectionne une chaîne de diffusion, un contenu multimédia peut être proposé à l'utilisateur, en remplacement du contenu multimédia diffusé en direct par la chaîne de diffusion sélectionnée. Une tel mode de réalisation permet donc d'enrichir la programmation de contenus proposée par les chaînes de diffusion, par la possibilité pour l'utilisateur de visionner ou d'écouter un contenu multimédia mieux adapté (automatiquement ou non) à ses intérêts, à la place du contenu multimédia programmé. Le contenu multimédia d'intérêt est avantageusement récupéré par le dispositif de lecture à partir d'un serveur distant, avant l'instant prédéterminé de diffusion du contenu multimédia programmé dans la grille de programmes, de façon à éviter de devoir transmettre au dispositif de lecture, au même instant prédéterminé, le contenu multimédia d'intérêt, en parallèle du flux de diffusion du contenu multimédia programmé. Une telle disposition permet d'éviter de surcharger le réseau local de transmission de données auquel est connecté le dispositif de lecture, et plus généralement le réseau de communication qui relie le serveur de contenus multimédia et différents dispositifs de lecture susceptibles de requérir des contenus d'intérêt au même instant prédéterminé de diffusion du contenu multimédia programmé.

Ainsi, grâce à l'invention, compte tenu du fait que le contenu multimédia est stocké à l'avance dans le dispositif de lecture, même un utilisateur disposant d'un débit de transmission faible, aurait la possibilité de visionner et/ou d'écouter un contenu multimédia adapté à ses intérêts, à la place d'un contenu multimédia programmé, dans des conditions de fonctionnement optimales. Il en résulte que l'invention s'adresse à un large parc de dispositifs de lecture, qu'ils soient limités ou non en débit, et moyennant un espace de stockage adapté.

Un autre avantage du mode de réalisation qui vient d'être décrit réside dans le fait qu'en l'absence de contenus multimédia téléchargés dans le dispositif de lecture selon l'invention, l'utilisateur accède malgré tout aux contenus transportés dans un flux de diffusion d'une chaîne donnée, lequel constitue ainsi un flux reçu par défaut par le dispositif de lecture.

Selon un autre mode de réalisation particulier, suite à l'envoi au serveur distant de la requête en fourniture du contenu multimédia à lire à l'instant prédéterminé, le dispositif de lecture reçoit en plus de l'identifiant du contenu multimédia à lire, qui est associé à une information de balisage de flux, au moins un autre identifiant d'un contenu multimédia à lire à un autre instant prédéterminé, l'autre identifiant étant associé lui-même à une information de balisage de flux correspondante.

Grâce à cet autre mode de réalisation, l'invention propose avantageusement de télécharger plusieurs contenus multimédia à lire à des instants prédéterminés respectifs, de manière à constituer ainsi pour l'utilisateur une chaîne de diffusion personnalisée, pour laquelle le flux diffusé contient une pluralité d'informations de balisage associées respectivement à une pluralité de contenus multimédia téléchargés préalablement dans le dispositif de lecture de l'utilisateur.

Selon un autre mode de réalisation particulier, l'ordre des informations de balisage et/ou le contenu des informations de balisage est modifiable.

Ainsi, un contenu multimédia associé à une information de balisage donnée pourra être substitué par un contenu multimédia associé à une autre information de balisage.

Selon un autre mode de réalisation particulier, le marquage temporel d'au moins une information de balisage dans le flux de diffusion peut être supprimé s'il est décidé de ne pas diffuser le contenu multimédia associé à cette information de balisage.

Selon un autre mode de réalisation particulier, le marquage temporel d'au moins une information de balisage dans le flux de diffusion peut être ajouté s'il est décidé d'ajouter à la volée un contenu multimédia associé à cette information de balisage. Un tel mode de réalisation peut s'avérer utile dans le cas où la ligne éditoriale de la régie de télédiffusion ou de radiodiffusion doit être modifiée en temps réel.

Ainsi, les régies de chaînes de diffusion de contenus ont la possibilité de modifier à la volée, dans le flux diffusé, l'ordre d'insertion prévu des informations de balisage ou encore remplacer le contenu d'une information de balisage par un autre, ce qui n'a pas d'impact pour l'utilisateur, dont les contenus multimédia à lire ont été téléchargés à l'avance en association avec les informations de balisage correspondantes. Les régies de chaînes peuvent également supprimer à la volée l'inscription d'une information de balisage qui était prévue.

Selon un autre mode de réalisation particulier, avant l'instant prédéterminé de lecture du contenu multimédia, l'identifiant du contenu multimédia, qui a été reçu, est une adresse d'accès au contenu multimédia, depuis le serveur distant ou un autre serveur distant.

Grâce à ce mode de réalisation, le dispositif reçoit directement en réponse à la requête en fourniture de contenus multimédia, qu'il a envoyée au serveur distant, une adresse d'accès à un fichier contenant ledit contenu, tel que par exemple un fichier vidéo ou audio. De cette manière, le dispositif de lecture peut, quasiment directement en réponse à la requête, télécharger le fichier qui contient le contenu demandé, à partir du serveur distant ou d'un autre serveur de contenus distant.

Selon un autre mode de réalisation, avant l'instant prédéterminé de lecture du contenu multimédia, l'identifiant du contenu multimédia, qui a été reçu, est une chaîne de caractères à partir de laquelle le dispositif de lecture créée une adresse d'accès au contenu multimédia depuis un serveur de contenus différent du serveur distant.

Une telle disposition permet au dispositif de lecture, en reconstruisant lui-même le chemin d'accès au contenu, d'accéder à un serveur de contenus qui appartient, non pas aux régies de chaînes de diffusion, mais à des fournisseurs de contenus indépendants et partenaires de l'opérateur de télécommunications auquel est abonné l'utilisateur.

Les différents modes ou caractéristiques de réalisation précités peuvent être ajoutés indépendamment ou en combinaison les uns avec les autres, au procédé de lecture défini ci-dessus.

L'invention concerne également un dispositif de lecture d'un flux représentatif d'un contenu multimédia à un instant prédéterminé.

Un tel dispositif de lecture est remarquable en ce qu'il comprend un module de traitement qui est agencé pour mettre en œuvre ce qui suit :
- avant l'instant prédéterminé :
   - envoyer à un serveur distant une requête en fourniture d'un contenu multimédia à lire,
   - recevoir un identifiant du contenu multimédia à lire, l'identifiant étant associé à une information de balisage de flux,
   - stocker l'identifiant reçu en correspondance avec l'information de balisage reçue,
   - télécharger tout ou partie du contenu multimédia à partir de l'identifiant reçu,
- à l'instant prédéterminé :
- recevoir un flux contenant une information de balisage identique à l'information de balisage qui a été stockée avant l'instant prédéterminé,
- à partir de l'information de balisage identique reçue, lire le contenu multimédia téléchargé correspondant à l'identifiant stocké en correspondance avec l'information de balisage.

L'invention concerne encore un programme d'ordinateur comportant des instructions pour mettre en œuvre le procédé de lecture selon l'invention, lorsqu'il est exécuté sur un terminal ou plus généralement sur un ordinateur.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré un programme d'ordinateur, ce programme comportant des instructions adaptées à la mise en œuvre du procédé de lecture selon l'invention, tel que décrit ci-dessus.

Un tel support d'enregistrement peut être n'importe quelle entité ou dispositif capable de stocker le programme. Par exemple, le support peut comporter un moyen de stockage, tel qu'une ROM ou une RAM, par exemple un CD ROM, une ROM ou une RAM de circuit microélectronique, une clé USB, ou encore un moyen d'enregistrement magnétique, par exemple un disque dur.

D'autre part, un tel support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé de lecture précité.

Le dispositif de réception, le programme d'ordinateur et le support d'enregistrement correspondants précités présentent au moins les mêmes avantages que ceux conférés par le procédé de lecture selon la présente invention.

### IV. Liste des figures

D'autres avantages et caractéristiques de l'invention apparaîtront plus clairement à la lecture de la description suivante de plusieurs modes de réalisation particuliers de l'invention, donnés à titre de simples exemples illustratifs et non limitatifs, et des dessins annexés, parmi lesquels :
- la figure 1 présente de façon schématique un premier mode de réalisation d'une architecture dans laquelle est mis en œuvre le procédé de lecture de contenu multimédia selon l'invention ;
- la figure 2 représente la structure d'un flux de diffusion, selon un premier mode de réalisation ;
- la figure 3 représente un premier mode de réalisation d'un dispositif de lecture mettant en œuvre le procédé de lecture de contenu multimédia selon l'invention ;
- la figure 4A présente de façon schématique le déroulement d'un procédé de lecture de contenu multimédia, dans le contexte de diffusion de la figure 1, selon une première alternative ;
- les figures 4B et 4C présentent de façon schématique le déroulement d'un procédé de lecture de contenu multimédia, dans le contexte de diffusion de la figure 1, selon une deuxième alternative ;
- la figure 5 présente de façon schématique un deuxième mode de réalisation d'une architecture dans laquelle est mis en œuvre le procédé de lecture de contenu multimédia selon l'invention ;
- la figure 6 représente la structure d'un flux de diffusion, selon un deuxième mode de réalisation ;
- la figure 7 représente un deuxième mode de réalisation d'un dispositif de lecture mettant en œuvre le procédé de lecture de contenu multimédia selon l'invention ;
- la figure 8 présente de façon schématique un mode de réalisation du déroulement d'un procédé de lecture de contenu multimédia, dans le contexte de diffusion de la figure 5.

### V. Description de modes de réalisation particuliers de l'invention

### V.1.1 Description du système de diffusion mettant en œuvre l'invention selon un premier mode de réalisation

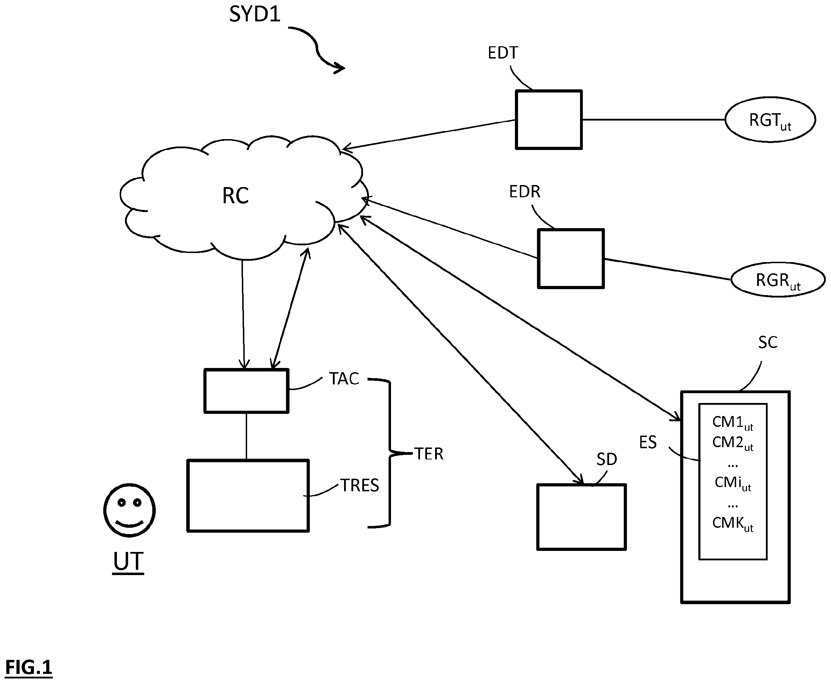

En relation avec la figure 1, on présente un mode de réalisation d'un système SYD1 de diffusion de flux, dans lequel est mis en œuvre le procédé de lecture de contenu multimédia selon un premier mode de réalisation.

Selon l'invention, le système de diffusion SYD1 comprend :
- une régie de télédiffusion RGTᵤₜ dédiée uniquement à un utilisateur UT et apte à proposer à ce dernier au moins un contenu multimédia CMᵤₜ de type audiovisuel, à un instant prédéterminé, et/ou
- un régie de radiodiffusion RGRᵤₜ dédiée uniquement à l'utilisateur UT et apte à proposer à ce dernier au moins un contenu multimédia CMᵤₜ de type audio, à un instant prédéterminé.

A cet effet, le système comprend :
- un équipement de diffusion EDT associé à la régie de télédiffusion RGTᵤₜ,
- un équipement de diffusion EDR associé à la régie de radiodiffusion RGRᵤₜ.

De façon connue en soi, les équipements de diffusion EDT et EDR sont adaptés à diffuser des flux, par exemple, par voie aérienne (ex : hertzienne ou satellite) selon la technique dite de « broadcast » ou alors au moyen d'un réseau matériel (ex : câble ou fibre) de type Internet, selon la technique multicast ou unicast. Chaque flux diffusé contient une ou plusieurs informations de balisage associées respectivement à un ou plusieurs instants prédéterminés de lecture d'un contenu multimédia donné.

Le système de diffusion précité permet à un terminal TER appartenant à l'utilisateur UT de recevoir le flux diffusé en provenance de l'équipement de diffusion EDT ou EDR, aussi bien en situation de mobilité qu'en situation de sédentarité, via un réseau de communication RC.

En situation de mobilité, le terminal TER est par exemple un téléphone portable, un smartphone (« téléphone intelligent »), une tablette, un ordinateur portable, etc...

En situation de sédentarité, le terminal TER pourrait être un ordinateur personnel de type PC.

Toujours en situation de sédentarité, et comme représenté sur la figure 1 , le terminal TER comprend par exemple :
- un terminal d'accès TAC qui est apte à recevoir et traiter les flux diffusés en provenance de l'équipement de diffusion EDT ou EDR,
- un terminal de restitution TRES qui est apte à restituer à l'utilisateur UT au moins tout ou partie d'un contenu multimédia, à partir d'un instant prédéterminé indiqué dans le flux diffusé qui a été traité par le terminal d'accès TAC.

Dans un exemple de réalisation, le terminal d'accès TAC et le terminal de restitution TRES sont regroupés en un seul terminal. Il pourrait par exemple s'agir d'un téléviseur contenant un décodeur de type set-top-box. Dans un autre exemple, le terminal d'accès TAC est un boîtier de connexion Internet et le terminal de restitution TRES est une tablette faisant office de terminal de restitution connecté au boîtier au moyen d'un réseau local, par exemple sans fil, en particulier du type WiFi ou CPL (abréviation de « courants porteurs en ligne »). Selon un autre exemple, le terminal d'accès TAC est un boîtier de connexion Internet et le terminal de restitution est un poste de radio connecté à ce boîtier au moyen d'un réseau local, par exemple sans fil, en particulier du type WiFi ou CPL.

Le terminal d'accès TAC est aussi muni de moyens de stockage de contenus multimédia. De façon alternative, il peut aussi être connecté à un module d'enregistrement de contenus multimédia externe.

L'utilisateur UT peut interagir avec le terminal d'accès TAC à l'aide d'une télécommande classique ou à l'aide d'un terminal qui comprend à cet effet une application logicielle adaptée de télécommande. Le terminal d'accès TAC, de même que le terminal TER, comprennent en outre des moyens de connexion au réseau de communication RC qui peuvent être, par exemple, de type x-DSL, fibre ou encore 3G, 4G, 5G.

Un contenu multimédia à lire à un instant prédéterminé fait partie d'un ensemble ES de contenus multimédia CM1ᵤₜ, CM2ᵤₜ,..., CMiᵤₜ,..., CMKᵤₜ prédéterminés, avec 1≤i≤K. L'ensemble ES est stocké dans un serveur de contenus SC qui est accessible via le réseau de communication RC.

Par contenu multimédia, on entend un contenu de type audiovisuel, de type audio, ou encore de type graphique (ex : image contenant ou non du texte). Le serveur de contenus SC appartient à l'opérateur de télécommunications qui gère le réseau de communication RC ou bien à un fournisseur de services ayant conclu un partenariat avec l'opérateur de télécommunications.

Le système de diffusion SYD1 comprend également un serveur distant SD qui est destiné à recevoir des requêtes en provenance du terminal TAC, via le réseau de communication RC. Sur la figure 1, le serveur distant SD est distinct du serveur de contenus SC. Toutefois, selon un autre exemple, le serveur distant SD pourrait comprendre le serveur de contenus SC.

### V.1.2 Description de la structure d'un flux diffusé selon un premier mode de réalisation

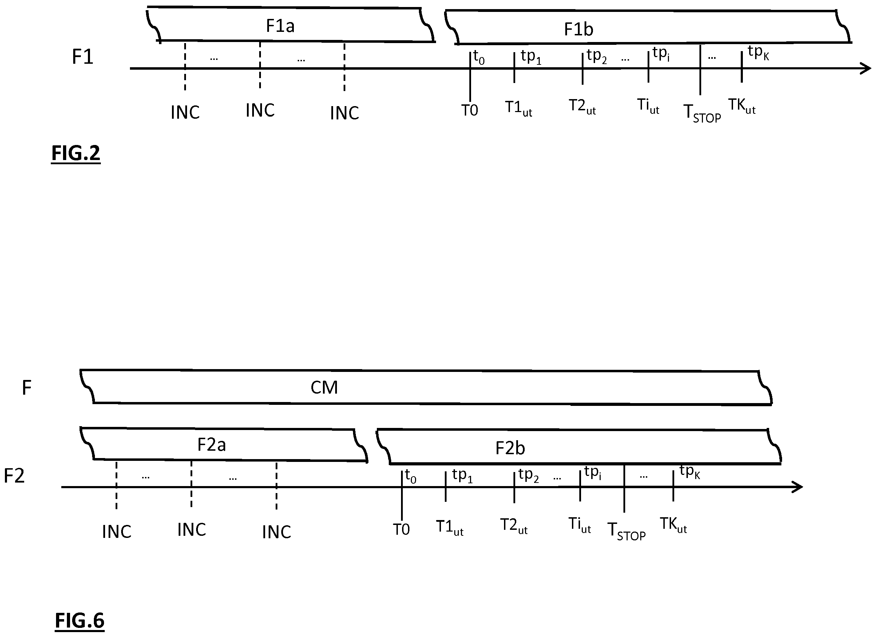

En référence à la figure 2, est représenté un premier mode de réalisation de la structure d'un flux F1, tel que diffusé par les équipements de diffusion EDT et EDR de la figure 1.

Le flux F1 se compose de deux portions F1 a et F1 b.

La portion de flux F1a est éditée préalablement à sa diffusion et peut contenir ou pas une information INC qui est relative à un contenu multimédia CM1ᵤₜ destiné à être lu à un instant prédéterminé tp₁. La régie RGTᵤₜ ou RGRᵤₜ peut inscrire plusieurs fois l'information INC dans la portion de flux F1a, par exemple toutes les 30 secondes. La et/ou les informations INC étant optionnelles, elles sont représentées en pointillé sur la figure 2.

La portion de flux F1b est éditée préalablement à sa diffusion de manière à contenir :
- une information de balisage T1ᵤₜ qui est un marqueur temporel de l'instant prédéterminé tp₁,
- une autre information de balisage T₀ qui est un marqueur temporel d'un instant t₀ précédant de quelques secondes l'instant prédéterminé tp₁.

De façon optionnelle, la portion de flux F1b peut contenir une information de balisage T_{STOP} ajoutée en temps réel et associée à un contenu multimédia spécifique diffusé en temps réel. Ce contenu multimédia spécifique est une information à caractère exceptionnel, que la régie de télédiffusion RGTᵤₜ ou de radiodiffusion RGRᵤₜ a besoin de diffuser au plus vite à l'utilisateur UT dès qu'elle en a eu connaissance.

Dans l'exemple de la figure 2, les deux portions de flux F1a et F1b appartiennent au même flux F1. Selon un autre exemple, les portions de flux F1a et F1b pourraient correspondre à deux flux distincts.

Comme représenté sur la figure 2, une pluralité de K contenus multimédia CM1ᵤₜ, CM2ᵤₜ,..., CMiᵤₜ,..., CMKᵤₜ, tel que K≥1, sont destinés à être lus respectivement à des instants prédéterminés tp₁, tp₂,..., tpᵢ,..., tp_{K}. A cet effet, la portion de flux F1b est éditée préalablement à sa diffusion de manière à contenir une pluralité d'informations de balisage T1ᵤₜ, T2ᵤₜ,..., Tiᵤₜ,..., TKᵤₜ, qui sont associées respectivement aux instants prédéterminés tp₁, tp₂,..., tpᵢ,..., tp_{K}. Selon ce mode de réalisation, si une information INC est présente dans la portion de flux F1a, l'information INC est relative à la pluralité de K contenus multimédia CM1ᵤₜ, CM2ᵤₜ,..., CMiᵤₜ,..., CMKᵤₜ.

Dans l'exemple de la figure 2, la signalisation des informations de balisage est réalisée directement dans le flux F1, c'est-à-dire in-band.

Selon un mode de réalisation, les informations de balisage précitées sont des balises, telles que par exemple du type SCTE 104/35.

Selon un autre mode de réalisation non représenté, les informations de balisage précitées sont indiquées dans un sous-flux de signalisation associé au flux F1.

### V.1.3 Description d'un dispositif de lecture de contenu multimédia selon un premier mode de réalisation

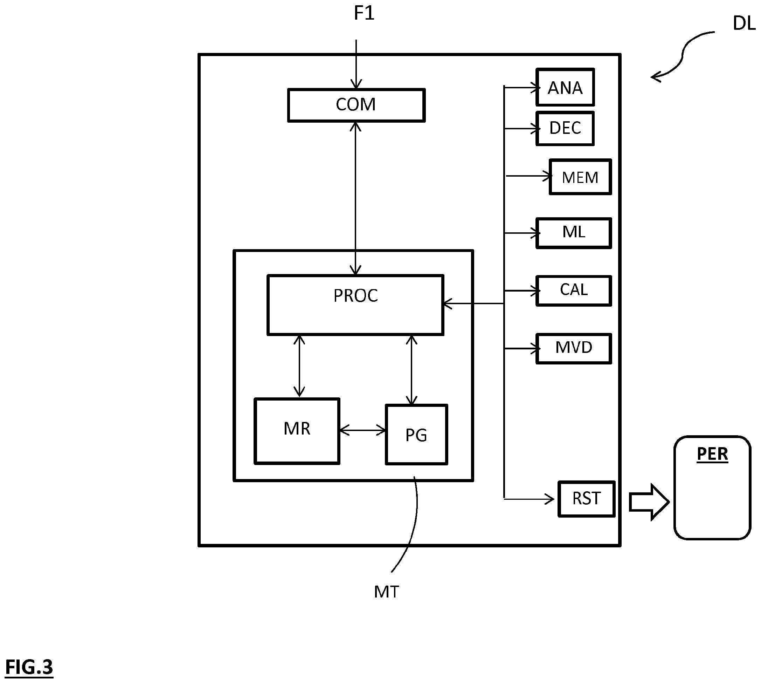

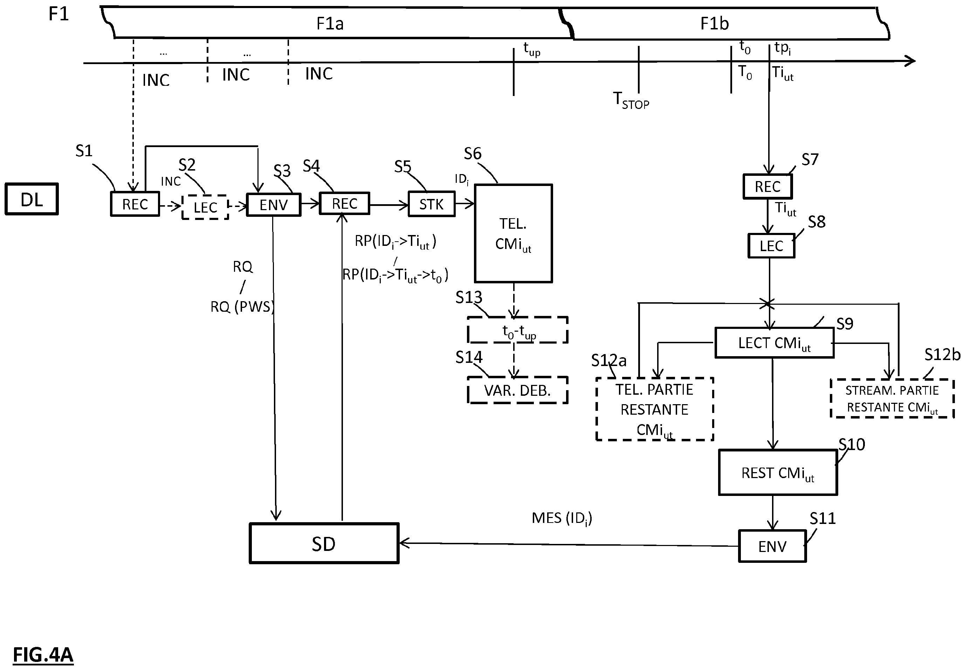

En relation avec la figure 3, on considère maintenant, selon un premier mode de réalisation, la structure simplifiée d'un dispositif DL de lecture de contenu multimédia selon l'invention. Un tel dispositif est contenu dans le terminal d'accès TAC de la figure 1, selon un exemple de réalisation de l'invention. Un tel dispositif de lecture DL est adapté pour mettre en œuvre le procédé de lecture de contenu multimédia selon l'invention qui va être décrit ci-dessous en référence aux figures 4A à 4C.

Le dispositif de lecture DL comprend :
- un module de communication COM qui est adapté pour communiquer, via le réseau de communication RC, selon par exemple le protocole http (abréviation anglaise de « HyperText Transfer Protocol »), avec les équipements de diffusion EDT et EDR de la figure 1,
- un module ANA d'analyse des flux reçus en provenance des équipements de diffusion EDT ou EDR,
- un module MEM de stockage de données, tel que par exemple une mémoire tampon, qui est adapté pour contenir des informations extraites des flux reçus, ainsi que des contenus multimédia,
- un module DEC de décodage audio, vidéo ou encore audio/vidéo des données de contenu multimédia, lesdites données pouvant être de type texte et/ou audio et/ou image et/ou vidéo et/ou audiovisuel,
- un module ML de lecture de contenu multimédia,
- un module RST de restitution qui est adapté pour restituer le(s) contenu(s) multimédia lu(s), sur un dispositif périphérique PER,
- un module CAL qui est adapté pour calculer des durées entre différents instants marqués dans les flux reçus en provenance des équipements de diffusion EDT ou EDR,
- un module MVD qui est adapté pour faire varier le débit de transmission de données dans le réseau de communication RC.

Le dispositif de lecture DL comprend des ressources physiques et/ou logicielles, en particulier un module de traitement MT pour mettre en œuvre le procédé de lecture de contenu multimédia des figures 4A à 4C.

Le module de traitement MT contient un processeur PROC piloté par un programme d'ordinateur PG. Les modules COM, ANA, MEM, ML, CAL, MVD et RST sont pilotés par le processeur PROC du module de traitement MT.

A l'initialisation, les instructions de code du programme d'ordinateur PG sont par exemple chargées dans une mémoire RAM, notée MR, avant d'être exécutées par le module de traitement MT.

### V.1.4 Description d'un procédé de lecture de contenu multimédia selon un premier mode de réalisation

### a) Première variante

Une première variante d'un premier mode de réalisation du procédé de lecture selon l'invention est maintenant décrite en relation avec la figure 4A.

En préalable à ce procédé, l'utilisateur UT du dispositif de lecture DL s'est préalablement inscrit à un service de lecture de contenus multimédia programmés, par exemple auprès de l'opérateur de télécommunications auquel il a souscrit un abonnement. Au cours de cette inscription, l'utilisateur UT a indiqué une ou plusieurs informations de profil PWS le concernant, telles que par exemple :
- le numéro de département de la ville dans laquelle habite l'utilisateur UT, et/ou
- le nom de la rue dans laquelle habite l'utilisateur UT, et/ou
- l'âge de l'utilisateur UT, et/ou
- la nationalité de l'utilisateur UT, et/ou
- le revenu annuel de l'utilisateur UT, et/ou
- le statut de l'utilisateur UT, par exemple marié, célibataire, sans enfant, famille nombreuse, étudiant, cadre, employé, et/ou,
- le type d'abonnement auquel a souscrit l'utilisateur UT, et/ou,
- une ou plusieurs plages horaires au cours desquelles l'utilisateur UT a l'habitude de regarder la télévision ou d'écouter la radio,
- le/les genre(s) de contenu que l'utilisateur UT préfère (ex : actualités, film, émissions de variétés, chronique radio, diaporama de photos, etc...),
- le/les catégorie(s) de contenu que l'utilisateur UT préfère (ex : science-fiction, musique classique, animaux sauvages, etc...).
- etc...,

Dans la première variante considérée sur la figure 4A, on considère qu'au moins un contenu multimédia CMiᵤₜ est destiné à être lu à un instant prédéterminé de diffusion tp₁. On considère également que le dispositif de lecture DL est en mode veille, l'utilisateur UT étant soit absent de son domicile, soit chez lui, mais n'ayant pas besoin de faire fonctionner son dispositif de lecture.

Le procédé de lecture se déroule ensuite comme suit :
En S1, le module de communication COM de la figure 3 reçoit le flux F1, tel que celui représenté sur la figure 2. Selon une première variante, pour laquelle aucune information INC précitée n'est présente dans la portion de flux F1a, au bout d'une durée prédéterminée configurée dans le dispositif de lecture DL ou bien sur réception d'une requête émise en provenance du serveur distant SD, le module de traitement MT active en S3 le module de communication COM, pour qu'il envoie au serveur distant SD, via le réseau de communication RC de la figure 1, une requête RQ en fourniture d'un contenu multimédia à lire à un instant prédéterminé.

Selon une deuxième variante, pour laquelle une ou plusieurs informations INC précitées sont présentes dans la portion de flux F1a, au cours de la réception S1, le module COM reçoit une information INC contenue dans la portion de flux F1a, l'information INC étant relative à un contenu multimédia à lire à un instant prédéterminé diffusé plus tard, dans la portion F1b du flux F1.

En S2, le module d'analyse ANA de la figure 3 lit l'information INC.

En S3, suite à la lecture de l'information INC, le module de traitement MT active le module de communication COM, pour qu'il envoie au serveur distant SD, via le réseau de communication RC de la figure 1, une requête RQ en fourniture d'un contenu multimédia à lire à un instant prédéterminé.

Il est fait en sorte que l'information INC inscrite dans la portion de flux F1a soit associée à un laps de temps préparatoire à l'action d'envoi S3. Ce laps de temps préparatoire associé à l'information INC est prédéfini et est de l'ordre de quelques secondes, 8s par exemple.

En S4, le module de communication COM reçoit en provenance du serveur distant SD une réponse RP à la requête RQ. La réponse RP contient :
- un identifiant IDᵢ d'un contenu multimédia CMiᵤₜ d'intérêt pour l'utilisateur UT,
- et une information de balisage de flux Tiᵤₜ, associée à l'identifiant IDᵢ.

L'information de balisage Tiᵤₜ est destinée à être inscrite dans la portion F1b du flux F1, à l'instant prédéterminé tp₁.

En S5, le dispositif de lecture DL stocke dans la mémoire MEM l'identifiant IDᵢ reçu, en correspondance avec l'information de balisage Tiᵤₜ reçue.

En S6, à partir de l'identifiant IDᵢ stocké en S5, le dispositif de lecture DL télécharge tout ou partie du contenu CMiᵤₜ dans la mémoire MEM ou bien dans une autre mémoire du dispositif DL dédiée au stockage de contenus multimédia.

Le contenu CMiᵤₜ est stocké en association avec l'identifiant IDᵢ et l'information de balisage Tiᵤₜ.

Les opérations S1 à S6 sont mises en œuvre avant l'instant prédéterminé tp₁.

Le dispositif de lecture DL est alors mis en fonctionnement par l'utilisateur UT et sort du mode « veille ». On considère que la chaîne diffusée par la régie RGTᵤₜ ou RGRᵤₜ est sélectionnée par défaut.

A l'instant prédéterminé tpᵢ inscrit dans la portion de flux F1b, le module de communication COM reçoit en S7, dans la portion de flux F1b, l'information de balisage Tiᵤₜ.

En S8, le module d'analyse ANA de la figure 3 lit l'information de balisage Tiᵤₜ.

En S9, suite à la lecture de l'information de balisage Tiᵤₜ, le module de traitement MT active le module de lecture ML pour qu'il lise le contenu multimédia CMiᵤₜ, ou la partie de ce dernier, qui a été téléchargé en S6 et qui correspond à l'identifiant IDᵢ stocké en association avec l'information de balisage Tiᵤₜ.

Il est fait en sorte que l'information de balisage Tiᵤₜ inscrite dans la portion de flux F1b soit associée à un laps de temps préparatoire à l'action de lecture déclenchée en S9. Ce laps de temps préparatoire associé à l'information de balisage Tiᵤₜ est prédéfini et est de l'ordre de quelques secondes, 8s par exemple.

En S10, le module de restitution RST restitue le contenu multimédia CMiᵤₜ, ou la partie de ce dernier, sur le dispositif périphérique PER de la figure 3, au fur et à mesure que le contenu multimédia CMiᵤₜ est lu en S9.

Une fois que le contenu multimédia CMiᵤₜ a été restitué, en S11, le module de communication COM envoie au serveur distant SD un message MES indiquant que le contenu multimédia CMiᵤₜ a été lu. A titre d'exemple, le message MES peut contenir l'identifiant IDᵢ du contenu multimédia CMiᵤₜ. Ainsi, le fournisseur de contenus est ainsi assuré que l'utilisateur UT a bien lu le contenu multimédia CMiᵤₜ. Ce contenu est donc par exemple supprimé de la liste de contenus ES et ne sera ainsi plus proposé à l'utilisateur UT. L'opération S11 est optionnelle.

Grâce au procédé de lecture de contenu multimédia qui vient d'être décrit, il est possible de proposer à l'utilisateur UT, à l'instant prédéterminé tpᵢ associé à l'information de balisage Tiᵤₜ inscrite dans un flux de diffusion F1 reçu par le dispositif de lecture DL, de visionner et/ou d'écouter un contenu multimédia stocké au préalable dans le dispositif de lecture et qui soit susceptible de plaire à l'utilisateur UT.

Compte tenu du fait que le téléchargement de tout ou partie du contenu multimédia à lire à l'instant prédéterminé a lieu à l'avance dans le dispositif de lecture DL, le contenu multimédia CMiᵤₜ peut être avantageusement téléchargé avec un niveau de qualité supérieur à celui qu'il aurait s'il était diffusé en temps réel à l'instant prédéterminé tpᵢ, ce qui est d'autant plus intéressant pour l'utilisateur UT, dont le réseau local, auquel est connecté le dispositif de lecture DL, présenterait un faible débit de transmission.

En outre, puisque le contenu multimédia CMiᵤₜ a été téléchargé à l'avance, la lecture de ce contenu en S9 est avantageusement stable, car indépendante des fluctuations de débit du réseau local auquel est connecté le dispositif de lecture DL.

Lorsqu'en S6, une partie seulement du contenu multimédia CMiᵤₜ a été téléchargée, soit parce que le débit de transmission des données dans le réseau local de l'utilisateur UT a été ralenti ou parce que le temps n'était pas suffisant pour télécharger la totalité du contenu CMiᵤₜ avant l'instant prédéterminé tpᵢ, selon une première variante, la partie restante du contenu multimédia CMiᵤₜ est téléchargée en S12a, simultanément à la lecture en S9 de la partie qui a déjà été téléchargée avant l'instant prédéterminé tpᵢ, de manière à ce que la partie restante soit lue puis restituée à son tour, une fois terminée la lecture et la restitution de la partie déjà téléchargée. L'utilisateur UT peut ainsi visionner et/ou écouter la totalité du contenu multimédia CMiᵤₜ à l'instant prédéterminé tpᵢ et bénéficier du téléchargement complet de ce contenu pour éventuellement le revoir et/ou le réécouter plus tard.

Selon un cas d'usage particulièrement avantageux, le contenu multimédia CMiᵤₜ pourrait être un contenu multimédia diffusé en direct à un instant précédant de peu l'instant prédéterminé tpᵢ, à partir duquel seulement est disponible l'utilisateur UT pour visionner et/ou écouter le contenu multimédia CMiᵤₜ. Ainsi, l'utilisateur UT a la possibilité de visionner et/ou d'écouter le contenu multimédia CMiᵤₜ plus tard par rapport à l'instant où la diffusion de ce contenu multimédia a commencé.

Selon une deuxième variante, une fois que la partie du contenu multimédia CMiᵤₜ qui a déjà été téléchargée a été lue en S9, la partie restante du contenu multimédia CMiᵤₜ est lue en temps réel dans la portion de flux F1b, en S12b, selon un procédé de streaming adaptatif bien connu.

Selon un mode de réalisation, l'information de balisage Tiᵤₜ qui a été reçue en S4 est en outre associée à un instant t₀ qui est égal à, ou antérieurement proche de l'instant prédéterminé tp₁. De cette façon, le contenu multimédia CMiᵤₜ, ou la partie de ce dernier, qui est téléchargé(e) en S6 est mise en œuvre selon un débit de transmission de données qui tient compte de la durée comprise entre un instant tᵤₚ, à partir duquel le téléchargement S6 a commencé, et l'instant t₀.

A cet effet, le module de traitement MT active le module de calcul CAL pour qu'il calcule en S13 la durée t₀-tᵤₚ.

En S14, le module de traitement MT active le module MVD de variation de débit de façon à télécharger plus ou moins rapidement le contenu multimédia CMiᵤₜ en fonction de la durée t₀-tᵤₚ respectivement plus ou moins courte qui a été calculée en S13.

Les opérations S12a, S12b, S13 et S14 étant optionnelles, elles sont représentées en pointillés sur la figure 4A.

Selon un mode de réalisation, la requête RQ envoyée en S3 au serveur distant SD contient la/les information(s) de profil PWS concernant l'utilisateur UT, ce qui permet de proposer à l'instant prédéterminé tpᵢ un contenu multimédia CMiᵤₜ qui soit parfaitement ciblé au moment où l'utilisateur UT requiert ce contenu.

Selon un mode de réalisation, l'identifiant IDᵢ qui a été reçu en S4 est une adresse d'accès au contenu multimédia CMiᵤₜ, soit directement auprès du serveur SD, qui, selon un exemple possible non représenté sur la figure 1, peut contenir le serveur de contenus SC. Une telle adresse d'accès est par exemple une URL (de l'anglais « Uniform Resource Locator »).

Selon un autre mode de réalisation, l'identifiant IDᵢ qui a été reçu en S4 est une chaîne de caractères à partir de laquelle est créée, dans le dispositif de lecture DL, une adresse d'accès au contenu multimédia CMiᵤₜ auprès du serveur de contenus SC, l'adresse d'accès créée étant une URL. Une telle chaîne de caractères comprend par exemple le nom du fichier qui contient le contenu multimédia CMiᵤₜ, tel que par exemple :
- « CMiᵤₜ.mp4 » si le fichier est de type mp4,
- « CMiᵤₜ.mp3 » si le fichier est de type mp3,
- « CMiᵤₜ.jpg » si le fichier est de type jpeg.

Selon un mode particulier de réalisation, dans certaines situations, la régie RGTᵤₜ ou RGRᵤₜ peut également décider d'ajouter dans la portion de flux F1b au moins une nouvelle information de balisage T_{STOP} telle que décrite et représentée en référence à la figure 2. Une fois l'information T_{STOP} lue par le module d'analyse ANA de la figure 3, un arrêt de la restitution du contenu multimédia en cours de lecture est déclenché en vue de restituer en temps réel un contenu multimédia spécifique, tel que par exemple un flash d'informations audio et/ou vidéo informant l'utilisateur UT d'un événement particulier à caractère exceptionnel, tel que par exemple l'enlèvement d'un enfant.

L'information de balisage T_{STOP} est configurée de manière à ce que l'arrêt de la restitution du contenu multimédia en cours soit déclenché après un laps de temps prédéfini de quelques secondes, par exemple 8s, après la lecture de cette information.

### b) Deuxième variante

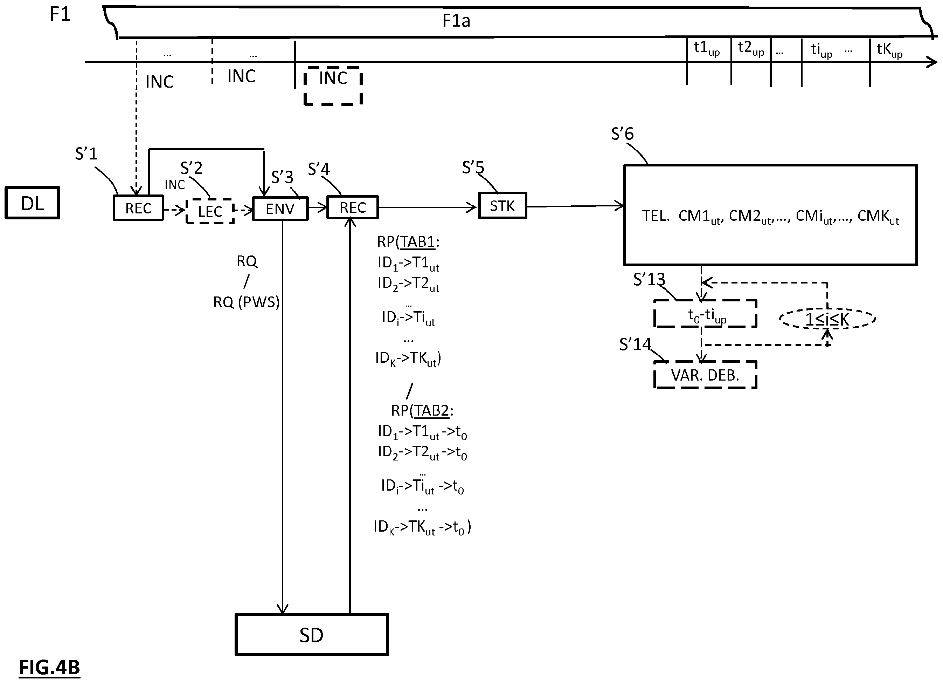

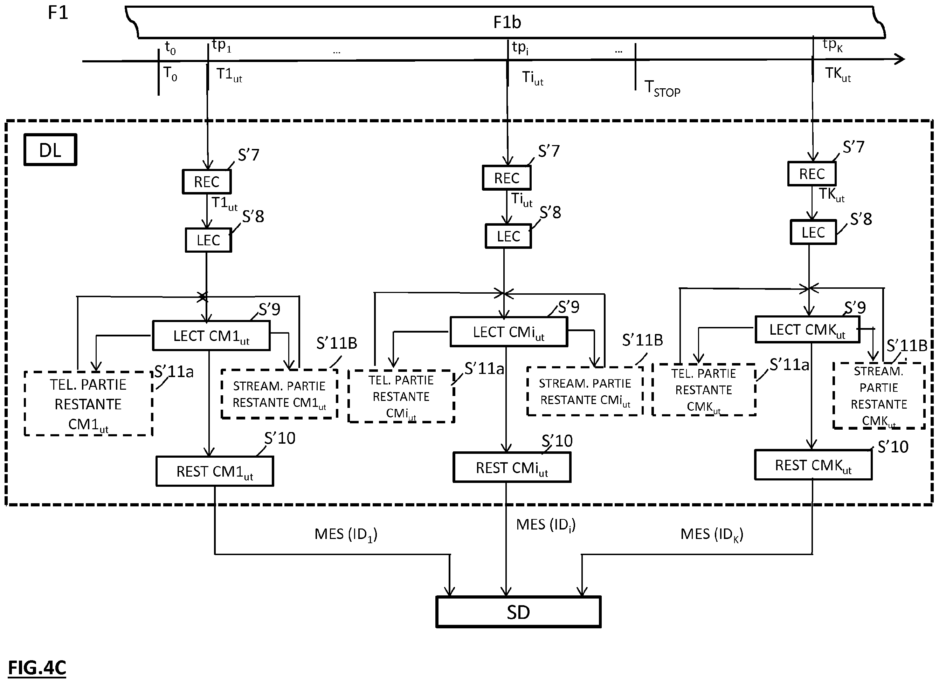

Une deuxième variante du premier mode de réalisation du procédé de lecture selon l'invention est maintenant décrite en relation avec les figures 4B et 4C.

Le procédé de lecture de la figure 4B présente des opérations communes aux opérations du procédé de lecture de la figure 4A, qui ont eues lieue avant l'instant prédéterminé tpᵢ de lecture. Pour cette raison, ces opérations ne seront pas décrites à nouveau.

Le procédé de lecture de la figure 4B se distingue de celui de la figure 4A par le fait que plusieurs contenus multimédia CM1ᵤₜ, CM2ᵤₜ,..., CMiᵤₜ,..., CMKᵤₜ sont lus à des instants prédéterminés correspondants tp₁, tp₂,..., tpᵢ,..., tp_{K} qui sont représentés à la figure 4C. Les instants prédéterminés tp₁, tp₂,..., tpᵢ,..., tp_{K} sont indiqués dans la portion de flux F1b par des informations de balisage T1ᵤₜ, T2ᵤₜ,..., Tiᵤₜ,..., TKᵤₜ correspondantes.

Comme pour la première variante précitée, en préalable au procédé de lecture des figures 4B et 4C, l'utilisateur UT du dispositif de lecture DL s'est préalablement inscrit à un service de lecture de contenus multimédia programmés, par exemple auprès de l'opérateur de télécommunications auquel il a souscrit un abonnement. Au cours de cette inscription, l'utilisateur UT a indiqué une ou plusieurs informations de profil PWS.

Le procédé de lecture selon cette deuxième alternative se déroule alors par la mise en œuvre des opérations S'1, S'2, S'3 qui sont identiques à celles décrites à la figure 4A. Le procédé de lecture se distingue de celui de la figure 4A par la mise en œuvre d'une opération S'4, au cours de laquelle le module de communication COM reçoit en provenance du serveur distant SD une réponse RP à la requête RQ. La réponse RP contient une table TAB1 qui contient:
- un identifiant ID₁ d'un contenu multimédia CM1ᵤₜ d'intérêt pour l'utilisateur UT, en association avec une information de balisage de flux T1ᵤₜ, associée à l'identifiant ID₁,
- un identifiant ID₂ d'un contenu multimédia CM2ᵤₜ d'intérêt pour l'utilisateur UT, en association avec une information de balisage de flux T2ᵤₜ, associée à l'identifiant ID₂,
- ...
- un identifiant IDᵢ d'un contenu multimédia CMiᵤₜ d'intérêt pour l'utilisateur UT, en association avec une information de balisage de flux Tiᵤₜ, associée à l'identifiant IDᵢ,
- ...,
- un identifiant ID_{K} d'un contenu multimédia CMKᵤₜ d'intérêt pour l'utilisateur UT, en association avec une information de balisage de flux TKᵤₜ, associée à l'identifiant ID_{K}.

Selon un mode de réalisation particulier, la table TAB1 contient un identifiant ID_{STOP} d'un contenu multimédia spécifique CM_{info} qui est relatif à une information à caractère exceptionnel, destinée à être diffusée en temps réel dans la portion de flux F1b, l'identifiant ID_{STOP} étant associé à une information de balisage T_{STOP}. Une telle information susceptible d'être diffusée en temps réel peut être par exemple l'annonce d'un événement important, tel que par exemple un attentat, une catastrophe naturelle, l'enlèvement d'un enfant, etc... Une telle information susceptible d'être diffusée en temps réel peut être également liée à l'information de profil PWS de l'utilisateur UT. Si par exemple l'information de profil PWS de l'utilisateur est associée au thème « football brésilien », l'information qui est diffusée en temps réel concerne par exemple une vidéo des buts marqués lors du dernier match joué au Brésil.

Les informations de balisage T1ᵤₜ, T2ᵤₜ,..., Tiᵤₜ,..., TKᵤₜ sont destinées à être inscrites dans la portion F1b du flux F1, à des instants prédéterminés correspondants tp₁, tp₂,..., tpᵢ,..., tp_{K}.

En S'5, le dispositif de lecture DL stocke dans la mémoire MEM la table TAB1 reçue.

En S'6, à partir des identifiants ID₁, ID₂,..., IDᵢ, ..., ID_{K} stockés en S'5, le dispositif de lecture DL télécharge tout ou partie des contenus multimédia correspondants CM1ᵤₜ, CM2ᵤₜ,..., CMiᵤₜ,..., CMKᵤₜ, dans la mémoire MEM ou bien dans une autre mémoire du dispositif DL dédiée au stockage de contenus multimédia.

Les contenus CM1ᵤₜ, CM2ᵤₜ,..., CMiᵤₜ,..., CMKᵤₜ sont stockés en association avec leurs identifiants correspondants ID₁, ID₂,..., IDᵢ, ..., ID_{K} et leurs informations de balisage correspondantes T1ᵤₜ, T2ᵤₜ,..., Tiᵤₜ,..., TKᵤₜ.

Les opérations S'1 à S'6 sont mises en œuvre avant les instants prédéterminés tp₁, tp₂,..., tpᵢ,..., tp_{K}.

Selon un mode de réalisation, chaque information de balisage T1ᵤₜ, T2ᵤₜ,..., Tiᵤₜ,..., TKᵤₜ qui a été reçue en S'4 est en outre, dans une table TAB2, associée à un instant t₀ qui est égal à, ou antérieurement proche, au premier instant prédéterminé tp₁ marqué temporellement dans la portion de flux F1b de la figure 4C De cette façon, le téléchargement en S'6 de chaque contenu multimédia, ou de la partie de ce contenu, est mis en œuvre selon un débit de transmission de données qui tient compte de la durée comprise entre chaque instant t1ᵤₚ, t2ᵤₚ,..., tiᵤₚ,..., tKᵤₚ, à partir duquel le téléchargement S'6 de chaque contenu a commencé, et l'instant t₀.

A cet effet, le module de traitement MT active le module de calcul CAL pour qu'il calcule en S'13 les durées respectives t₀-t1ᵤₚ, t₀-t2ᵤₚ,..., t₀-tiᵤₚ,..., t₀-tKup.

Comme la table TAB1, la table TAB2 peut contenir un identifiant ID_{STOP} d'un contenu multimédia spécifique CM_{info} qui est relatif à une information à caractère exceptionnel, destinée à être diffusée en temps réel dans la portion de flux F1b.

En S'14, le module de traitement MT active le module MVD de variation de débit de façon à télécharger plus ou moins rapidement chaque contenu multimédia en fonction de la durée correspondante, respectivement plus ou moins courte, qui a été calculée en S'13.

Les opérations S'13 et S'14 étant optionnelles, elles sont représentées en pointillés sur la figure 4B.

Selon un mode de réalisation, la requête RQ envoyée en S'3 au serveur distant SD contient la/les information(s) de profil PWS concernant l'utilisateur UT, ce qui permet de proposer, à chacun des K instants prédéterminés, un contenu multimédia qui soit parfaitement ciblé au moment où l'utilisateur UT a requis ces contenus.

Selon un mode de réalisation, les identifiants ID₁, ID₂,..., IDᵢ, ..., ID_{K} qui ont été reçus en S'4 sont des adresses d'accès respectives aux contenus multimédia CM1ᵤₜ, CM2ᵤₜ,..., CMiᵤₜ,..., CMKᵤₜ, soit directement auprès du serveur SD, qui, selon un exemple possible non représenté sur la figure 1, peut contenir le serveur de contenus SC. De telles adresses d'accès sont par exemple des liens URL.

Selon un autre mode de réalisation, chaque identifiant qui a été reçu en S'4 est une chaîne de caractères à partir de laquelle est créée, dans le dispositif de lecture DL, une adresse d'accès au contenu multimédia correspondant, auprès du serveur de contenus SC, l'adresse d'accès créée étant un lien URL.

A l'issue des opérations S'1 à S'6, le dispositif de lecture DL est alors mis en fonctionnement par l'utilisateur UT et sort du mode « veille ». On considère que la chaîne diffusée par la régie RGTᵤₜ ou RGRᵤₜ est sélectionnée par défaut.

En référence à la figure 4C, aux différents instants prédéterminés tp₁, tp₂,..., tpᵢ,..., tp_{K} inscrits dans la portion de flux F1b, le module de communication COM reçoit en S'7, dans la portion de flux F1b, les informations de balisage correspondantes T1ᵤₜ, T2ᵤₜ,..., Tiᵤₜ,..., TKᵤₜ.

En S'8, le module d'analyse ANA de la figure 3 lit les informations de balisage correspondantes T1ᵤₜ, T2ᵤₜ,..., Tiᵤₜ,..., TKᵤₜ.

En S'9, suite à la lecture des informations de balisage T1ᵤₜ, T2ᵤₜ,..., Tiᵤₜ,..., TKᵤₜ, le module de traitement MT active le module de lecture ML pour qu'il lise les contenus multimédia correspondants CM1ᵤₜ, CM2ᵤₜ,..., CMiᵤₜ,..., CMKᵤₜ, ou la partie de ces derniers, qui a été téléchargé en S'6, et qui correspondent respectivement aux identifiants ID₁, ID₂,..., IDᵢ, ..., ID_{K} stockés en association avec les informations de balisage correspondantes T1ᵤₜ, T2ᵤₜ,..., Tiᵤₜ,..., TKᵤₜ.

En S'10, le module de restitution RST restitue successivement chacun des K contenus multimédia précités, ou la partie de ces derniers, sur le dispositif périphérique PER de la figure 3, au fur et à mesure que chaque contenu multimédia est lu en S'9.

Une fois que chaque contenu multimédia CM1ᵤₜ, CM2ᵤₜ,..., CMiᵤₜ,..., CMKᵤₜ a été restitué, en S'11, le module de communication COM envoie au serveur distant SD un message MES indiquant que le contenu multimédia considéré a été lu. A titre d'exemple, pour un contenu multimédia considéré CMiᵤₜ, le message MES peut contenir l'identifiant IDᵢ du contenu multimédia CMiᵤₜ. Ainsi, le fournisseur de contenus est ainsi assuré que l'utilisateur UT a bien lu les contenus multimédia CM1ᵤₜ, CM2ᵤₜ,..., CMiᵤₜ,..., CMKᵤₜ. Ces contenus sont donc par exemple supprimés de la liste de contenus ES et ne seront ainsi plus proposés à l'utilisateur UT. Ils seront alors remplacés par de nouveaux contenus multimédias. L'opération S'11 est optionnelle.

Grâce au procédé de lecture de contenu multimédia selon cette deuxième alternative, il est possible de proposer à l'utilisateur UT une chaîne personnalisée de contenus multimédia thématiques, grâce à laquelle l'utilisateur UT a la possibilité de visionner et/ou d'écouter à la suite plusieurs contenus multimédia stockés au préalable dans le dispositif de lecture et qui sont susceptibles de plaire à l'utilisateur UT.

Compte tenu du fait que le téléchargement de tout ou partie de ces contenus multimédia a lieu à l'avance dans le dispositif de lecture DL, les contenus multimédia peuvent être avantageusement téléchargés avec un niveau de qualité supérieur à celui qu'ils auraient s'ils étaient diffusés en temps réel à leurs instants prédéterminés respectifs, ce qui est d'autant plus intéressant pour l'utilisateur UT, dont le réseau local, auquel est connecté le dispositif de lecture DL, présenterait un faible débit de transmission.

En outre, puisque les contenus multimédia ont été téléchargés à l'avance, leur lecture en S'9 est avantageusement stable, car indépendante des fluctuations de débit du réseau local auquel est connecté le dispositif de lecture DL.

Un autre avantage lié au fait que tout ou partie des contenus multimédia est téléchargée à l'avance, réside dans le fait que la régie RGTᵤₜ ou RGRᵤₜ peut décider, peu de temps avant l'instant t₀ précité, soit de modifier l'ordre d'apparition, dans la portion de flux F1b, des informations de balisage T1ᵤₜ, T2ᵤₜ,..., Tiᵤₜ,..., TKᵤₜ, soit de supprimer une ou plusieurs de ces dernières.

Dans certaines situations, la régie RGTᵤₜ ou RGRᵤₜ peut également décider d'ajouter dans la portion de flux F1b au moins une nouvelle information de balisage T_{STOP} telle que déjà décrite plus haut, et qui, une fois lue par le module d'analyse ANA de la figure 3, déclenche un arrêt de la restitution du contenu multimédia en cours de lecture, en vue de restituer en temps réel un contenu multimédia particulier, tel que par exemple un flash d'informations audio et/ou vidéo informant l'utilisateur d'un événement particulier, tel que par exemple l'enlèvement d'un enfant.

A cet effet, en S'8, le module d'analyse ANA de la figure 3 lit l'information de balisage T_{STOP} qui est associée à un contenu multimédia d'informations particulier, tel que par exemple un bandeau textuel/image annonçant par exemple l'enlèvement d'un enfant en précisant le nom de l'enfant, le lieu de l'enlèvement, l'heure de l'enlèvement, une photo de l'enfant, etc....

En S'9, suite à la lecture de l'information de balisage T_{STOP}, le module de traitement MT active le module de lecture ML pour qu'il lise le contenu multimédia correspondant CM_{info} qui a été téléchargé en S'6, et qui correspond à l'identifiant ID_{STOP} stocké en association avec l'information de balisage T_{STOP}. Le contenu multimédia correspondant CM_{info} est une vidéo preéditée et personnalisée en rapport avec l'événement d'enlèvement d'enfant : le contenu multimédia comprend par exemple un message sonore du type « alerte enlèvement », un emplacement graphique prédéfini pour y incruster le bandeau textuel précité donnant toutes les informations sur l'enlèvement.

En S'10, le module de restitution RST restitue alors le contenu multimédia CM_{info} avec incrustation du bandeau textuel/image précité, sur le dispositif périphérique PER de la figure 3.

Lorsqu'en S'6, une partie seulement des contenus multimédia CM1ᵤₜ, CM2ᵤₜ,..., CMiᵤₜ,..., CMKᵤₜ a été téléchargée, soit parce que le débit de transmission des données dans le réseau local de l'utilisateur UT a été ralenti ou parce que le temps n'était pas suffisant pour télécharger la totalité des contenus avant leurs instants prédéterminés respectifs tp₁, tp₂,..., tpᵢ,..., tp_{K}, selon une première variante, la partie restante de ces contenus est téléchargée en S'11a, simultanément à la lecture en S'9 de la partie qui a déjà été téléchargée avant chaque instant prédéterminé correspondant, de manière à ce que la partie restante soit lue puis restituée à son tour, une fois terminée la lecture et la restitution de la partie déjà téléchargée. L'utilisateur UT peut ainsi visionner et/ou écouter la totalité de chaque contenu multimédia à l'instant prédéterminé de lecture de ce dernier, et bénéficier du téléchargement complet de ces contenus pour éventuellement les revoir et/ou les réécouter plus tard.

Selon une deuxième variante, en S'11b, la partie restante de ces contenus est lue en temps réel dans la portion de flux F1b, selon un procédé de streaming adaptatif bien connu.

Selon un mode de réalisation particulier, dans le cas où les contenus multimédia CM1ᵤₜ, CM2ᵤₜ,..., CMiᵤₜ,..., CMKᵤₜ n'auraient pas pu être téléchargés à l'avance dans le dispositif de lecture DL, ces contenus peuvent être téléchargés en temps réel suite à la lecture S'8, dans la portion de flux F1b, de l'information de balisage T1ᵤₜ. Des actions identiques aux actions S'3, S'4, S'5 et S'6 de la figure 4B seront alors mises en œuvre dans le dispositif de lecture DL.

### V.2.1 Description du système de diffusion mettant en œuvre l'invention selon un deuxième mode de réalisation

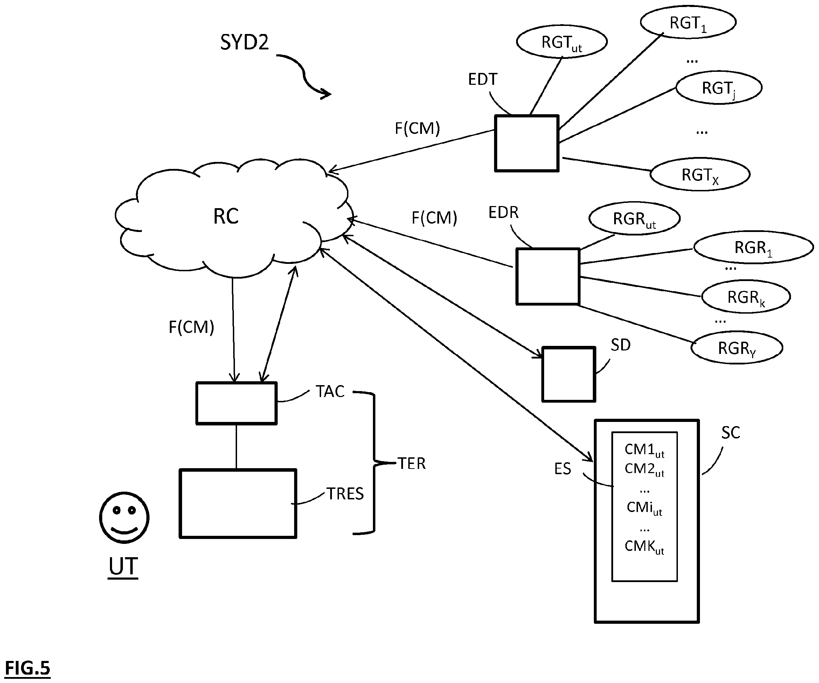

En relation avec la figure 5, on présente un deuxième mode de réalisation d'un système SYD2 de diffusion de flux, dans lequel est mis en œuvre le procédé de lecture de contenu multimédia selon un deuxième mode de réalisation.

Le système de diffusion SYD2 de la figure 5 présente des éléments communs avec le système de diffusion SYD1 de la figure 1. Pour cette raison, ces éléments sont représentés par les mêmes références numériques et ne seront pas décrits à nouveau. Dans l'exemple de la figure 5, le système de diffusion SYD2 comprend :
- des régies de chaînes de télévision existantes RGT₁, RGT₂, ..., RGTⱼ,..., RGT_{X},
- des régies de chaînes de radio existantes RGR₁, RGR₂, ..., RGRₖ,..., RGR_{Y}.

De telles régies coexistent avec les régies de télédiffusion RGTᵤₜ et de radiodiffusion RGRᵤₜ qui sont dédiées uniquement à l'utilisateur UT.

Un contenu multimédia CM, représentatif d'un programme proposé par l'une des régies RGT₁, RGT₂, ..., RGTⱼ,..., RGT_{X} ou bien RGR₁, RGR₂, ..., RGRₖ,..., RGR_{Y} est transporté dans un flux F jusqu'au terminal d'accès TAC.

Le contenu multimédia CM de type télévisuel est diffusé en direct par un équipement de diffusion EDT, tandis que le contenu multimédia CM de type radio est diffusé en direct par un équipement de diffusion EDR.

### V.2.2 Description de la structure de flux diffusé selon un deuxième mode de réalisation

En référence à la figure 6, est représenté un deuxième mode de réalisation de la structure d'un flux F2, tel que diffusé par les équipements de diffusion EDT et EDR de la figure 5.

Le flux F2 est structurellement le même que le flux F1 de la figure 2. Dans l'exemple de la figure 6, le flux F2 est associé à un flux F transportant au moins un contenu multimédia CM qui est représentatif d'un programme proposé par l'une des régies RGT₁, RGT₂, ..., RGTⱼ,..., RGT_{X} ou bien RGR₁, RGR₂, ..., RGRₖ,..., RGRy.

Supposons qu'il s'agisse de la régie RGTᵢ.

Dans le cas où la régie RGTᵢ et la régie RGTᵤₜ font partie du même groupe, le flux F2 peut être un sous-flux de signalisation du flux F.

Dans le cas contraire, le flux F2 est indépendant du flux F.

### V.2.3 Description d'un dispositif de lecture de contenu multimédia selon un deuxième mode de réalisation

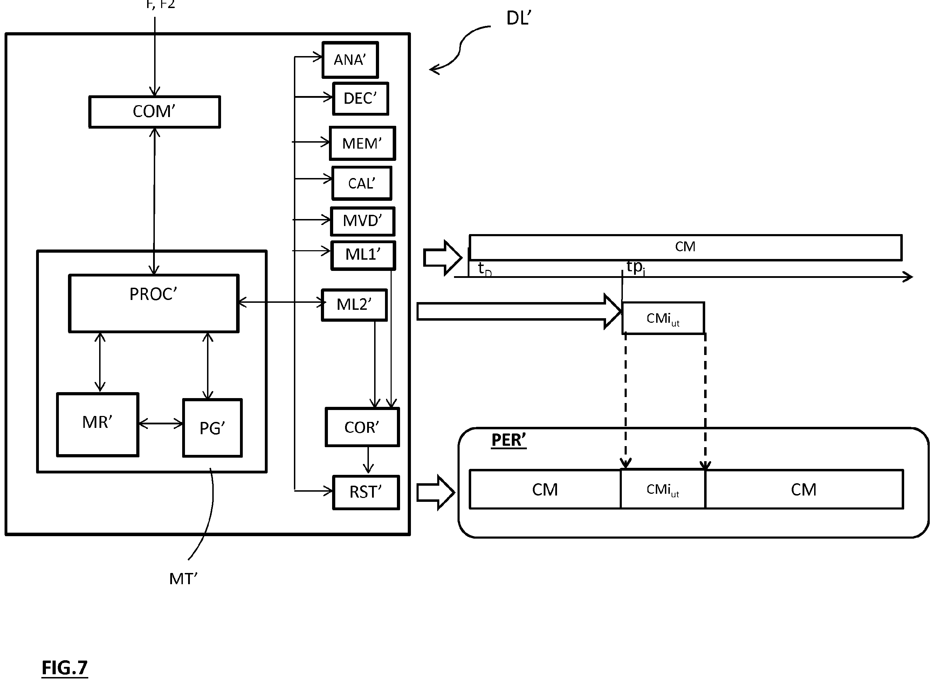

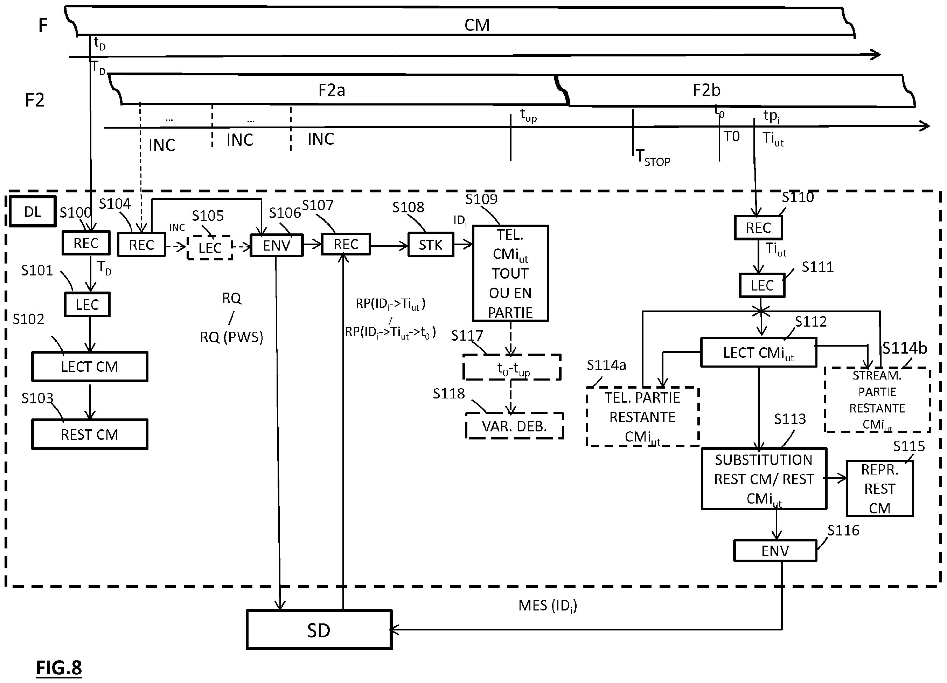

En relation avec la figure 7, on considère maintenant, selon un deuxième mode de réalisation, la structure simplifiée d'un dispositif DL' de lecture de contenu multimédia selon l'invention. Un tel dispositif est contenu dans le terminal d'accès TAC de la figure 5, selon un exemple de réalisation de l'invention. Un tel dispositif de lecture DL' est adapté pour mettre en œuvre le procédé de lecture de contenu multimédia selon l'invention qui va être décrit ci-dessous en référence à la figure 8.

Le dispositif de lecture DL' comprend, de façon identique au dispositif de lecture DL de la figure 3 :
- un module de communication COM' qui est adapté pour communiquer, via le réseau de communication RC, selon par exemple le protocole http, avec les équipements de diffusion EDT et EDR de la figure 5,
- un module ANA' d'analyse des flux reçus en provenance des équipements de diffusion EDT ou EDR,
- un module MEM' de stockage de données, tel que par exemple une mémoire tampon, qui est adapté pour contenir des informations extraites des flux reçus, ainsi que des contenus multimédia,
- un module DEC' de décodage audio, vidéo ou encore audio/vidéo des données de contenu multimédia, lesdites données pouvant être de type texte et/ou audio et/ou image et/ou vidéo et/ou audiovisuel,
- un module RST' de restitution qui est adapté pour restituer le(s) contenu(s) multimédia lu(s), sur un dispositif périphérique PER',
- un module CAL' qui est adapté pour calculer des durées entre différents instants marqués dans les flux reçus en provenance des équipements de diffusion EDT ou EDR,
- un module MVD' qui est adapté pour faire varier le débit de transmission de données dans le réseau de communication RC.

Le dispositif de lecture DL' se distingue du dispositif de lecture DL en ce qu'au lieu de contenir un unique module de lecture ML, il comprend :
- un premier module de lecture ML'1 pour lire le contenu multimédia CM diffusé en direct dans le flux F,
- un deuxième module de lecture ML'2 pour lire au moins un contenu multimédia d'intérêt CMiᵤₜ, parallèlement à la lecture du contenu multimédia CM par le premier module de lecture ML'1,
- un module de contrôle de restitution COR' adapté pour commander la restitution, par le module de restitution RST',
   - soit du contenu multimédia CM ou des portions de celui-ci, lu(es) par le module de lecture ML'1,
   - soit de chaque contenu multimédia d'intérêt lu par le module de lecture ML'2, à la place du contenu multimédia CM courant.

Le dispositif de lecture DL' comprend des ressources physiques et/ou logicielles, en particulier un module de traitement MT' pour mettre en œuvre le procédé de lecture de contenu multimédia de la figure 8.

Le module de traitement MT' contient un processeur PROC' piloté par un programme d'ordinateur PG'. Les modules COM', ANA', MEM', ML'1, ML'2, CAL', MVD', COR' et RST' sont pilotés par le processeur PROC' du module de traitement MT'.

A l'initialisation, les instructions de code du programme d'ordinateur PG' sont par exemple chargées dans une mémoire RAM', notée MR', avant d'être exécutées par le module de traitement MT'.

### V.2.4 Description d'un procédé de lecture de contenu multimédia selon un deuxième mode de réalisation

Un deuxième mode de réalisation du procédé de lecture selon l'invention est maintenant décrit en relation avec la figure 8.

En préalable au procédé de lecture de la figure 8, l'utilisateur UT du dispositif de lecture DL' s'est préalablement inscrit à un service de lecture de contenus multimédia programmés, par exemple auprès de l'opérateur de télécommunications auquel il a souscrit un abonnement. Au cours de cette inscription, l'utilisateur UT a indiqué une ou plusieurs informations de profil PWS. L'utilisateur UT a aussi par exemple sélectionné par défaut une chaîne de diffusion parmi celles des régies RGT₁, RGT₂, ..., RGTⱼ,..., RGT_{X} ou bien RGR₁, RGR₂, ..., RGRₖ,..., RGR_{Y}, telles que représentées sur la figure 5. La chaîne sélectionnée par défaut est par exemple la chaîne de la régie RGTᵢ.

Dans le mode de réalisation représenté sur la figure 8, on considère qu'au moins un contenu multimédia CMiᵤₜ est destiné à être lu à un instant prédéterminé de diffusion tp₁. On considère également que le dispositif de lecture DL' est en fonctionnement, l'utilisateur UT étant en train de regarder un contenu multimédia CM proposé par la chaîne de la régie RGTᵢ.

En référence aux figures 7 et 8, le procédé de lecture se déroule ensuite comme suit :
En S100, le module de communication COM' reçoit le flux F, lequel contient un marqueur temporel T_{D} de l'instant t_{D} de début de diffusion du contenu multimédia CM.

En S101, le module d'analyse ANA' lit le marqueur temporel T_{D}.

En S102, après un laps de temps prédéfini de quelques secondes (ex : 8s) associé au marqueur temporel T_{D}, le module de traitement MT' active le module de lecture ML'1 pour qu'il lise le contenu multimédia CM diffusé.

En S103, le module de restitution REST' restitue le contenu multimédia CM, au fur et à mesure que ce dernier est lu en S102.

En S104, le module de communication COM' reçoit, simultanément au flux F, le flux F2. Selon une première variante, pour laquelle aucune information INC précitée n'est présente dans la portion de flux F2a, au bout d'une durée prédéterminée configurée dans le dispositif de lecture DL' ou bien sur réception d'une requête émise en provenance du serveur distant SD, le module de traitement MT' active en S106 le module de communication COM', pour qu'il envoie au serveur distant SD, via le réseau de communication RC de la figure 5, une requête RQ en fourniture d'un contenu multimédia à lire à un instant prédéterminé.

Selon une deuxième variante, pour laquelle une ou plusieurs informations INC précitées sont présentes dans la portion de flux F2a, au cours de la réception S104, le module COM' reçoit une information INC contenue dans la portion de flux F2a, l'information INC étant relative à un contenu multimédia à lire à un instant prédéterminé diffusé plus tard, dans la portion F2b du flux F2.

En S105, le module d'analyse ANA' de la figure 7 lit l'information INC.

En S106, suite à la lecture de l'information INC, le module de traitement MT' active le module de communication COM', pour qu'il envoie au serveur distant SD, via le réseau de communication RC de la figure 5, une requête RQ en fourniture d'un contenu multimédia à lire à un instant prédéterminé.

En S107, le module de communication COM' reçoit en provenance du serveur distant SD une réponse RP à la requête RQ. La réponse RP contient :
- un identifiant IDᵢ d'un contenu multimédia CMiᵤₜ d'intérêt pour l'utilisateur UT,
- et une information de balisage de flux Tiᵤₜ, associée à l'identifiant IDᵢ.

L'information de balisage Tiᵤₜ est destinée à être inscrite dans la portion F2b du flux F2 à l'instant prédéterminé tp₁.

En S108, le dispositif de lecture DL' stocke dans la mémoire MEM' l'identifiant IDᵢ reçu, en correspondance avec l'information de balisage Tiᵤₜ reçue.

En S109, à partir de l'identifiant IDᵢ stocké en S108, le dispositif de lecture DL' télécharge tout ou partie du contenu CMiᵤₜ dans la mémoire MEM' ou bien dans une autre mémoire du dispositif DL' dédiée au stockage de contenus multimédia.

Le contenu CMiᵤₜ est stocké en association avec l'identifiant IDᵢ et l'information de balisage Tiᵤₜ.

Les opérations S104 à S109 sont mises en œuvre avant l'instant prédéterminé tp₁.

A l'instant prédéterminé tpᵢ inscrit dans la portion de flux F2b, le module de communication COM' reçoit en S110, dans la portion de flux F2b, l'information de balisage Tiᵤₜ.

En S111, le module d'analyse ANA' de la figure 7 lit l'information de balisage Tiᵤₜ.

En S112, suite à la lecture de l'information de balisage Tiᵤₜ, le module de traitement MT' active le module de lecture ML'2 pour qu'il lise le contenu multimédia CMiᵤₜ, ou la partie de ce dernier, qui a été téléchargé en S109 et qui correspond à l'identifiant IDᵢ stocké en association avec l'information de balisage Tiᵤₜ.

En S113, le module de contrôle de restitution COR' commande alors la restitution du contenu multimédia CMiᵤₜ, sur le périphérique PER', à la place de la restitution du contenu multimédia CM qui est en train d'être lu par le premier module de lecture ML'1.

Lorsqu'en S109, une partie seulement du contenu multimédia CMiᵤₜ a été téléchargée, soit parce que le débit de transmission des données dans le réseau local de l'utilisateur UT a été ralenti ou parce que le temps n'était pas suffisant pour télécharger la totalité du contenu CMiᵤₜ avant l'instant prédéterminé tpᵢ, selon une première variante, la partie restante du contenu multimédia CMiᵤₜ est téléchargée en S114a, simultanément à la lecture en S112 de la partie qui a déjà été téléchargée avant l'instant prédéterminé tpᵢ, de manière à ce que la partie restante soit lue puis restituée à son tour, une fois terminée la lecture et la restitution de la partie déjà téléchargée. L'utilisateur UT peut ainsi visionner et/ou écouter la totalité du contenu multimédia CMiᵤₜ à l'instant prédéterminé tpᵢ et bénéficier du téléchargement complet de ce contenu pour éventuellement le revoir et/ou le réécouter plus tard.

Selon une deuxième variante, une fois que la partie du contenu multimédia CMiᵤₜ qui a déjà été téléchargée a été lue en S109, la partie restante du contenu multimédia CMiᵤₜ est lue en temps réel dans la portion de flux F1b, en S114b, selon un procédé de streaming adaptatif bien connu.

Une fois que le contenu multimédia CMiᵤₜ a fini d'être restitué, le module de contrôle de restitution COR' commande alors en S115, sur le périphérique PER', la restitution à nouveau du contenu multimédia CM qui est en cours de diffusion ou bien du contenu multimédia qui suit le contenu multimédia CM, si la diffusion de ce dernier s'est terminée pendant la restitution du contenu multimédia CMiᵤₜ.

Une fois que le contenu multimédia CMiᵤₜ a été restitué en S113, en S116, le module de communication COM' envoie au serveur distant SD un message MES indiquant que le contenu multimédia CMiᵤₜ a été lu. A titre d'exemple, le message MES peut contenir l'identifiant IDᵢ du contenu multimédia CMiᵤₜ. L'opération S116 est optionnelle.

Un tel procédé de lecture selon le deuxième mode de réalisation permet de remplacer à la volée un contenu multimédia CM en cours de diffusion et visionné et/ou écouté par l'utilisateur UT, par un contenu multimédia CMiᵤₜ plus adapté au profil de l'utilisateur UT et qui a été stocké à l'avance dans le dispositif de lecture DL' avec une meilleure qualité audio et/ou vidéo. De cette manière, quel que soit le moment où l'utilisateur UT sélectionne une chaîne de diffusion, un contenu multimédia peut être proposé à l'utilisateur UT, en remplacement du contenu multimédia CM diffusé en direct par la chaîne de diffusion sélectionnée par l'utilisateur UT.

Selon un mode de réalisation, l'information de balisage Tiᵤₜ qui a été reçue en S104 est en outre associée à un instant t₀ qui est égal à, ou antérieurement proche de l'instant prédéterminé tp₁. De cette façon, le contenu multimédia CMiᵤₜ, ou la partie de ce dernier, qui est téléchargé(e) en S109 est mise en œuvre selon un débit de transmission de données qui tient compte de la durée comprise entre un instant tᵤₚ, à partir duquel le téléchargement S109 a commencé, et l'instant t₀.

A cet effet, le module de traitement MT' active le module de calcul CAL' pour qu'il calcule, en S117, la durée t₀-tᵤₚ.

En S118, le module de traitement MT' active le module MVD' de variation de débit de façon à télécharger plus ou moins rapidement le contenu multimédia CMiᵤₜ en fonction de la durée t₀-tᵤₚ respectivement plus ou moins courte qui a été calculée en S117.

Les opérations S117 et S118 étant optionnelles, elles sont représentées en pointillés sur la figure 8.

Selon un mode de réalisation, la requête RQ envoyée en S106 au serveur distant SD contient la/les information(s) de profil PWS concernant l'utilisateur UT, ce qui permet de proposer à l'instant prédéterminé tpᵢ un contenu multimédia CMiᵤₜ qui soit parfaitement ciblé au moment où l'utilisateur UT requiert ce contenu.

Selon un mode de réalisation, l'identifiant IDᵢ qui a été reçu en S107 est une adresse d'accès au contenu multimédia CMiᵤₜ, soit directement auprès du serveur SD, qui, selon un exemple possible non représenté sur la figure 5, peut contenir le serveur de contenus SC. Une telle adresse d'accès est par exemple une URL (de l'anglais « Uniform Resource Locator »).

Selon un autre mode de réalisation, l'identifiant IDᵢ qui a été reçu en S107 est une chaîne de caractères à partir de laquelle est créée, dans le dispositif de lecture DL', une adresse d'accès au contenu multimédia CMiᵤₜ auprès du serveur de contenus SC, l'adresse d'accès créée étant une URL. Une telle chaîne de caractères comprend par exemple le nom du fichier qui contient le contenu multimédia CMiᵤₜ, tel que par exemple :
- « CMiᵤₜ.mp4 » si le fichier est de type mp4,
- « CMiᵤₜ.mp3 » si le fichier est de type mp3,
- « CMiᵤₜ.jpg » si le fichier est de type jpeg.

Le procédé de lecture qui vient d'être décrit en référence aux figures 7 et 8 peut bien entendu être mis en œuvre pour une pluralité de contenus multimédia CM1ᵤₜ, CM2ᵤₜ,..., CMiᵤₜ,..., CMKᵤₜ destinés à être lus à des instants prédéterminés correspondants tp₁, tp₂,..., tpᵢ,..., tp_{K}.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Procédé de lecture d'un contenu multimédia (CM1ᵤₜ), à un instant prédéterminé (tp₁) inscrit dans un flux de diffusion reçu par un dispositif de lecture de contenu multimédia, **caractérisé en ce que**, au niveau d'un dispositif de lecture du contenu multimédia, est mis en œuvre ce qui suit :
- avant l'instant prédéterminé :
• envoyer (S3) à un serveur distant une requête (RQ) en fourniture du contenu multimédia à lire,
• recevoir (S4) un identifiant (ID₁) du contenu multimédia à lire, l'identifiant étant associé à une information de balisage (T1ᵤₜ) de flux,
• stocker (S5) l'identifiant reçu en correspondance avec l'information de balisage,
• télécharger (S6) tout ou partie du contenu multimédia (CM1ᵤₜ), à partir de l'identifiant reçu,
- à l'instant prédéterminé (tpᵢ) :
- recevoir (S7) un flux contenant une information de balisage (T1ᵤₜ) identique à ladite information de balisage qui a été stockée avant l'instant prédéterminé,
- à partir de l'information de balisage identique reçue, lire (S9) le contenu multimédia (CM1ᵤₜ) téléchargé correspondant à l'identifiant stocké en correspondance avec l'information de balisage.

2. Procédé de lecture selon la revendication 1, dans lequel lorsque c'est une partie du contenu multimédia qui a été téléchargée, puis lue à l'instant prédéterminé, le téléchargement de la partie restante du contenu multimédia (CM1ᵤₜ) se poursuit (S12a) simultanément à la lecture (S9) de la partie téléchargée, de sorte que la partie restante du contenu multimédia soit lue à la suite de la partie téléchargée qui a été lue à l'instant prédéterminé.

3. Procédé de lecture selon la revendication 1, dans lequel lorsque c'est une partie du contenu multimédia qui a été téléchargée, puis lue à l'instant prédéterminé, la partie restante du contenu multimédia est lue (S12b) dans le flux en temps réel, à la suite de la partie téléchargée qui a été lue à l'instant prédéterminé.

4. Procédé de lecture selon l'une quelconque des revendications 1 à 3, dans lequel :
- l'information de balisage qui est reçue avant l'instant prédéterminé étant en outre associée à un instant (t₀) égal à, ou antérieurement proche de, l'instant prédéterminé de lecture du contenu multimédia,
- le téléchargement du contenu multimédia est mis en œuvre selon un débit qui tient compte de l'instant égal à, ou antérieurement proche, de l'instant prédéterminé de lecture du contenu multimédia.

5. Procédé de lecture selon l'une quelconque des revendications 1 à 4, dans lequel lors de l'envoi au serveur distant de la requête (RQ) en fourniture du contenu multimédia à lire à l'instant prédéterminé, la requête contient une information de profil (PWS) d'un utilisateur du dispositif de lecture.

6. Procédé de lecture selon l'une quelconque des revendications 1 à 5, dans lequel un flux (F) représentatif d'au moins un contenu multimédia, différent du contenu multimédia à lire à l'instant prédéterminé, est reçu par le dispositif de lecture, en parallèle du flux (F2) qui est reçu avant et/ou à l'instant prédéterminé de lecture du contenu multimédia.

7. Procédé de lecture selon l'une quelconque des revendications 1 à 6, dans lequel, suite à l'envoi (S3) au serveur distant de la requête en fourniture du contenu multimédia à lire à l'instant prédéterminé, le dispositif de lecture reçoit (S4) en plus de l'identifiant (ID₁) du contenu multimédia (CM1ᵤₜ) à lire qui est associé à une information de balisage (T1ᵤₜ) de flux, au moins un autre identifiant (ID₂) d'un contenu multimédia (CM2ᵤₜ) à lire à un autre instant prédéterminé (tp₂), l'autre identifiant étant lui-même associé à une information de balisage de flux (T2ᵤₜ) correspondante.

8. Procédé de lecture selon la revendication 7, dans lequel l'ordre des informations de balisage (T1ᵤₜ, T2ᵤₜ) et/ou le contenu des informations de balisage est modifiable.

9. Procédé de lecture selon l'une quelconque des revendications 1 à 8, dans lequel avant l'instant prédéterminé de lecture du contenu multimédia, l'identifiant (ID₁) du contenu multimédia, qui a été reçu, est une adresse d'accès (URL) au contenu multimédia, depuis le serveur distant ou un autre serveur distant.

10. Procédé de lecture selon l'une quelconque des revendications 1 à 8, dans lequel avant l'instant prédéterminé de lecture du contenu multimédia, l'identifiant du contenu multimédia, qui a été reçu, est une chaîne de caractères à partir de laquelle le dispositif de lecture crée une adresse d'accès au contenu multimédia depuis un serveur de contenus différent du serveur distant.

11. Dispositif (DL) de lecture d'un contenu multimédia (CM1ᵤₜ) à un instant prédéterminé (tp₁) inscrit dans un flux de diffusion reçu par le dispositif, **caractérisé en ce qu'**il comprend un module de traitement (MT) qui est agencé pour mettre en œuvre ce qui suit :
- avant l'instant prédéterminé :
• envoyer à un serveur distant une requête en fourniture d'un contenu multimédia à lire,
• recevoir un identifiant (ID₁) du contenu multimédia à lire, l'identifiant étant associé à une information de balisage (T1ᵤₜ) de flux,
• stocker l'identifiant reçu en correspondance avec l'information de balisage reçue,
• télécharger tout ou partie du contenu multimédia à partir de l'identifiant reçu,
- à l'instant prédéterminé :
- recevoir un flux contenant une information de balisage identique à ladite information de balisage qui a été stockée avant l'instant prédéterminé,
- à partir de l'information de balisage identique reçue, lire le contenu multimédia téléchargé correspondant à l'identifiant stocké en correspondance avec l'information de balisage.

12. Programme d'ordinateur comportant des instructions qui implémentent le procédé de lecture selon l'une quelconque des revendications 1 à 10, lorsque ledit programme est exécuté sur un ordinateur.

13. Support d'enregistrement lisible par un ordinateur sur lequel est enregistré un programme d'ordinateur comprenant des instructions qui implémentent le procédé de lecture selon l'une quelconque des revendications 1 à 10, lorsque ledit programme est exécuté par un ordinateur.

## Patentansprüche

1. Verfahren zur Wiedergabe eines Multimediainhalts (CM1ᵤₜ) zu einem vorbestimmten Zeitpunkt (tp₁) , der in einem Rundsendestrom liegt, der von einer Multimediainhalts-Wiedergabevorrichtung empfangen wird, **dadurch gekennzeichnet, dass** an der Vorrichtung zur Wiedergabe des Multimediainhalts Folgendes durchgeführt wird:
- vor dem vorbestimmten Zeitpunkt:
• Senden (S3) einer Anfrage (RQ) zur Bereitstellung des wiederzugebenden Multimediainhalts an einen entfernten Server,
• Empfangen (S4) einer Kennung (ID₁) des wiederzugebenden Multimediainhalts, wobei die Kennung einer Stromauszeichnungsinformation (T1ᵤₜ) zugeordnet ist,
• Speichern (S5) der empfangenen Kennung entsprechend der Auszeichnungsinformation,
• Herunterladen (S6) des gesamten oder eines Teils des Multimediainhalts (CM1ᵤₜ) anhand der empfangenen Kennung,
- zum vorbestimmten Zeitpunkt (tpᵢ) :
- Empfangen (S7) eines Stroms, der eine Auszeichnungsinformation (T1ᵤₜ) enthält, die zu der Auszeichnungsinformation identisch ist, die vor dem vorbestimmten Zeitpunkt gespeichert wurde,
- anhand der empfangenen identischen Auszeichnungsinformation, Wiedergeben (S9) des heruntergeladenen Multimediainhalts (CM1ᵤₜ), der der Kennung entspricht, die entsprechend der Auszeichnungsinformation gespeichert wurde.

2. Wiedergabeverfahren nach Anspruch 1, wobei, wenn ein Abschnitt des Multimediainhalts heruntergeladen, dann zum vorbestimmten Zeitpunkt wiedergegeben wurde, das Herunterladen des restlichen Abschnitts des Multimediainhalts (CM1ᵤₜ) gleichzeitig mit dem Wiedergeben (S9) des heruntergeladenen Abschnitts weitergeht (S12a), so dass der restliche Abschnitt des Multimediainhalts im Anschluss an den heruntergeladenen Abschnitt wiedergegeben wird, der zum vorbestimmten Zeitpunkt wiedergegeben wurde.

3. Wiedergabeverfahren nach Anspruch 1, wobei, wenn ein Abschnitt des Multimediainhalts heruntergeladen, dann zum vorbestimmten Zeitpunkt wiedergegeben wurde, der restliche Abschnitt des Multimediainhalts in Echtzeit in dem Strom im Anschluss an den heruntergeladenen Abschnitt wiedergegeben (S12b) wird, der zum vorbestimmten Zeitpunkt wiedergegeben wurde.

4. Wiedergabeverfahren nach einem der Ansprüche 1 bis 3, wobei:
- die Auszeichnungsinformation, die vor dem vorbestimmten Zeitpunkt empfangen wird, ferner einem Zeitpunkt (to) zugeordnet wird, der gleich dem vorbestimmten Wiedergabezeitpunkt des Multimediainhalts ist oder vorher in dessen Nähe lag,
- das Herunterladen des Multimediainhalts mit einem Durchsatz durchgeführt wird, der den Zeitpunkt berücksichtigt, der gleich dem vorbestimmten Wiedergabezeitpunkt des Multimediainhalts ist oder vorher in dessen Nähe lag.

5. Wiedergabeverfahren nach einem der Ansprüche 1 bis 4, wobei beim Senden der Anfrage (RQ) zur Bereitstellung des Multimediainhalts, der zum vorbestimmten Zeitpunkt wiederzugeben ist, die Anfrage eine Profilinformation (PWS) eines Benutzers der Wiedergabevorrichtung enthält.

6. Wiedergabeverfahren nach einem der Ansprüche 1 bis 5, wobei ein Strom (F), der für mindestens einen Multimediainhalt repräsentativ ist, der sich von dem Multimediainhalt unterscheidet, der zum vorbestimmten Zeitpunkt wiederzugeben ist, von der Wiedergabevorrichtung parallel zu dem Strom (F2) empfangen wird, der vor und/oder zum vorbestimmten Wiedergabezeitpunkt des Multimediainhalts empfangen wird.

7. Wiedergabeverfahren nach einem der Ansprüche 1 bis 6, wobei im Anschluss an das Senden (S3) der Anfrage zur Bereitstellung des Multimediainhalts, der zum vorbestimmten Zeitpunkt wiederzugeben ist, an den entfernten Server, die Wiedergabevorrichtung zusätzlich zur Kennung (ID₁) des wiederzugebenden Multimediainhalts (CM1ᵤₜ), die einer Stromauszeichnungsinformation (T1ᵤₜ) zugeordnet ist, mindestens eine andere Kennung (ID₂) eines Multimediainhalts (CM2ᵤₜ) empfängt (S4), der zu einem anderen vorbestimmten Zeitpunkt (tp₂) wiederzugeben ist, wobei die andere Kennung selbst einer entsprechenden Stromauszeichnungsinformation (T2ᵤₜ) zugeordnet ist.

8. Wiedergabeverfahren nach Anspruch 7, wobei die Reihenfolge der Auszeichnungsinformationen (T1ᵤₜ, T2ᵤₜ) und/oder der Inhalt der Auszeichnungsinformationen änderbar ist.

9. Wiedergabeverfahren nach einem der Ansprüche 1 bis 8, wobei vor dem vorbestimmten Wiedergabezeitpunkt des Multimediainhalts die Kennung (ID₁) des Multimediainhalts, der empfangen wurde, eine Adresse zum Zugriff (URL) auf den Multimediainhalt von dem entfernten Server oder einem anderen entfernten Server ist.

10. Wiedergabeverfahren nach einem der Ansprüche 1 bis 8, wobei vor dem vorbestimmten Wiedergabezeitpunkt des Multimediainhalts die Kennung des Multimediainhalts, der empfangen wurde, eine Zeichenkette ist, anhand welcher die Wiedergabevorrichtung eine Adresse zum Zugriff auf den Multimediainhalt von einem Inhalteserver, der sich von dem entfernten Server unterscheidet, erzeugt.

11. Vorrichtung (DL) zur Wiedergabe eines Multimediainhalts (CM1ᵤₜ) zu einem vorbestimmten Zeitpunkt (tp₁), der in einem Rundsendestrom liegt, der von der Vorrichtung empfangen wird, **dadurch gekennzeichnet, dass** sie ein Verarbeitungsmodul (MT) umfasst, das angeordnet ist, Folgendes durchzuführen:
- vor dem vorbestimmten Zeitpunkt:
• Senden einer Anfrage zur Bereitstellung eines wiederzugebenden Multimediainhalts an einen entfernten Server,
• Empfangen einer Kennung (ID₁) des wiederzugebenden Multimediainhalts, wobei die Kennung einer Stromauszeichnungsinformation (T1ᵤₜ) zugeordnet ist,
• Speichern der empfangenen Kennung entsprechend der empfangenen Auszeichnungsinformation,
• Herunterladen des gesamten oder eines Teils des Multimediainhalts anhand der empfangenen Kennung,
- zum vorbestimmten Zeitpunkt:
- Empfangen eines Stroms, der eine Auszeichnungsinformation enthält, die zu der Auszeichnungsinformation identisch ist, die vor dem vorbestimmten Zeitpunkt gespeichert wurde,
- anhand der empfangenen identischen Auszeichnungsinformation, Wiedergeben des heruntergeladenen Multimediainhalts, der der Kennung entspricht, die entsprechend der Auszeichnungsinformation gespeichert wurde.

12. Computerprogramm umfassend Anweisungen, die das Wiedergabeverfahren nach einem der Ansprüche 1 bis 10 durchführen, wenn das Programm auf einem Computer ausgeführt wird.

13. Computerlesbares Speichermedium, auf dem ein Computerprogramm gespeichert ist, das Anweisungen umfasst, die das Wiedergabeverfahren nach einem der Ansprüche 1 bis 10 durchführen, wenn das Programm von einem Computer ausgeführt wird.

## Claims

1. Method for reading an item of multimedia content (CM1ᵤₜ), at a predetermined time (tpi) recorded in a broadcast stream received by a device for reading multimedia content, **characterized in that**, at the level of a device for reading the item of multimedia content, the following is implemented:
- before the predetermined time:
• sending (S3) a request (RQ) to provide the item of multimedia content to be read to a remote server,
• receiving (S4) an identifier (ID₁) of the item of multimedia content to be read, the identifier being associated with an item of stream marker information (T1ᵤₜ),
• storing (S5) the received identifier in correspondence with the item of marker information,
• downloading (S6) all or part of the item of multimedia content (CM1ᵤₜ) on the basis of the received identifier,
- at the predetermined time (tpi):
- receiving (S7) a stream containing an item of marker information (T1ᵤₜ) identical to said item of marker information that was stored before the predetermined time,
- on the basis of the received identical item of marker information, reading (S9) the downloaded item of multimedia content (CM1ᵤₜ) corresponding to the identifier stored in correspondence with the item of marker information.

2. Reading method according to Claim 1, wherein, when it is part of the item of multimedia content that has been downloaded and then read at the predetermined time, the downloading of the remaining part of the item of multimedia content (CM1ᵤₜ) continues (S12a) at the same time as the reading (S9) of the downloaded part, such that the remaining part of the item of multimedia content is read following the downloaded part that has been read at the predetermined time.

3. Reading method according to Claim 1, wherein, when it is part of the item of multimedia content that has been downloaded and then read at the predetermined time, the remaining part of the item of multimedia content is read (S12b) in the stream in real time, following the downloaded part that has been read at the predetermined time.

4. Reading method according to any one of Claims 1 to 3, wherein:
- the item of marker information that is received before the predetermined time is furthermore associated with a time (to) equal to, or slightly before, the predetermined time of reading of the item of multimedia content,
- the downloading of the item of multimedia content is implemented at a rate that takes into account the time equal to, or slightly before, the predetermined time of reading of the item of multimedia content.

5. Reading method according to any one of Claims 1 to 4, wherein, when sending the request (RQ) to provide the item of multimedia content to be read at the predetermined time to the remote server, the request contains an item of profile information (PWS) of a user of the reading device.

6. Reading method according to any one of Claims 1 to 5, wherein a stream (F) representative of at least one item of multimedia content, different from the item of multimedia content to be read at the predetermined time, is received by the reading device, in parallel with the stream (F2) that is received before and/or at the predetermined time of reading of the item of multimedia content.

7. Reading method according to any one of Claims 1 to 6, wherein, following sending (S3) of the request to provide the item of multimedia content to be read at the predetermined time to the remote server, the reading device receives (S4), in addition to the identifier (ID₁) of the item of multimedia content (CM1ᵤₜ) to be read, which is associated with an item of stream marker information (T1ᵤₜ), at least one other identifier (ID₂) of an item of multimedia content (CM2ᵤₜ) to be read at another predetermined time (tp₂), the other identifier itself being associated with a corresponding item of stream marker information (T2ᵤₜ).

8. Reading method according to Claim 7, wherein the order of the items of marker information (T1ᵤₜ, T2ᵤₜ) and/or the content of the items of marker information is able to be modified.

9. Reading method according to any one of Claims 1 to 8, wherein, before the predetermined time of reading of the item of multimedia content, the identifier (ID₁) of the item of multimedia content, which has been received, is an address (URL) for accessing the item of multimedia content from the remote server or another remote server.

10. Reading method according to any one of Claims 1 to 8, wherein, before the predetermined time of reading of the item of multimedia content, the identifier of the item of multimedia content, which has been received, is a character string from which the reading device creates an address for accessing the item of multimedia content from a content server different from the remote server.

11. Device (DL) for reading an item of multimedia content (CM1ᵤₜ) at a predetermined time (tp₁) recorded in a broadcast stream received by the device, **characterized in that** it comprises a processing module (MT) that is designed to implement the following:
- before the predetermined time:
• send a request to provide an item of multimedia content to be read to a remote server,
• receive an identifier (ID₁) of the item of multimedia content to be read, the identifier being associated with an item of stream marker information (T1ᵤₜ),
• store the received identifier in correspondence with the received item of marker information,
• download all or part of the item of multimedia content on the basis of the received identifier,
- at the predetermined time:
- receive a stream containing an item of marker information identical to said item of marker information that was stored before the predetermined time,
- on the basis of the received identical item of marker information, read the downloaded item of multimedia content corresponding to the identifier stored in correspondence with the item of marker information.

12. Computer program including instructions that implement the reading method according to any one of Claims 1 to 10 when said program is executed on a computer.

13. Computer-readable recording medium on which there is recorded a computer program comprising instructions that implement the reading method according to any one of Claims 1 to 10 when said program is executed by a computer.
